# FASCICULE DE BREVET EUROPEEN

(11) **EP 3 502 798 B1**
(45) Date de publication et mention de la délivrance du brevet: **24.06.2020**
(21) Numéro de dépôt: 17209130.8
(22) Date de dépôt: 20.12.2017
(51) Int. Cl.: G04C 10/00, G04C 3/04

(54) **PIECE D'HORLOGERIE COMPRENANT UN OSCILLATEUR MECANIQUE ASSOCIE A UN SYSTEME DE REGULATION**
UHRWERKSANORDNUNG, DIE EINEN MECHANISCHEN OSZILLATOR UMFASST, DER MIT EINER EINSTELLVORRICHTUNG VERBUNDEN IST
TIMEPIECE COMPRISING A MECHANICAL OSCILLATOR ASSOCIATED WITH A CONTROL SYSTEM

(43) Date de publication de la demande: 26.06.2019
(73) Titulaire: The Swatch Group Research and Development Ltd, 2074 Marin (CH)
(72) Inventeur: TOMBEZ, Lionel, 2022 Bevaix (CH)
(74) Mandataire: ICB SA

(56) Documents cités:
- EP-A1- 1 241 538
- US-A1- 2013 051 191

## Description

### Domaine technique

La présente invention concerne une pièce d'horlogerie comprenant un oscillateur mécanique associé à un système de régulation de sa fréquence moyenne. La régulation est du type électronique, c'est-à-dire que le système de régulation comprend un circuit électronique relié à un oscillateur auxiliaire qui est agencé pour fournir un signal d'horloge électrique de grande précision. Le système de régulation est agencé pour corriger une dérive temporelle éventuelle de l'oscillateur mécanique relativement à l'oscillateur auxiliaire.

En particulier, l'oscillateur mécanique comprend un résonateur mécanique formé par un balancier-spiral et un dispositif d'entretien formé par un échappement classique, par exemple à ancre suisse. L'oscillateur auxiliaire est formé notamment par un résonateur à quartz ou par un résonateur intégré dans le circuit électronique de régulation.

### Arrière-plan technologique

Des mouvements formant des pièces d'horlogerie telles que définies dans le domaine de l'invention ont été proposés dans quelques documents antérieurs. Le brevet CH 597 636, publié en 1977, propose un tel mouvement en référence à sa figure 3. Le mouvement est équipé d'un résonateur formé par un balancier-spiral et d'un dispositif d'entretien classique comprenant une ancre et une roue d'échappement en liaison cinématique avec un barillet muni d'un ressort. Ce mouvement horloger comprend un système de régulation de la fréquence de l'oscillateur mécanique. Ce système de régulation comprend un circuit électronique et un ensemble électromagnétique formé d'une bobine plate, agencée sur un support sous la serge du balancier, et de deux aimants montés sur le balancier et agencés proches l'un de l'autre de manière à passer tous deux au-dessus de la bobine lorsque l'oscillateur est activé.

Le circuit électronique comprend une base de temps comprenant un résonateur à quartz et servant à générer un signal de fréquence de référence FR, cette fréquence de référence étant comparée avec la fréquence FG de l'oscillateur mécanique. La détection de la fréquence FG est réalisée via les signaux électriques générés dans la bobine par la paire d'aimants. Le circuit de régulation est agencé pour pouvoir engendrer momentanément un couple de freinage via un couplage magnétique aimant-bobine et une charge commutable reliée à la bobine. Le document CH 597 636 donne l'enseignement suivant : « Le résonateur ainsi formé doit présenter une fréquence d'oscillation variable selon l'amplitude de part et d'autre de la fréquence FR (défaut d'isochronisme) ». On enseigne donc que l'on obtient une variation de la fréquence d'oscillation d'un résonateur non isochrone en variant son amplitude d'oscillation. Une analogie est faîte entre l'amplitude d'oscillation d'un résonateur et la vitesse angulaire d'une génératrice comprenant un rotor muni d'aimants et agencé dans un rouage du mouvement horloger pour en réguler sa marche. Comme un couple de freinage diminue la vitesse de rotation d'une telle génératrice et ainsi sa fréquence de rotation, il est ici seulement envisagé de pouvoir diminuer la fréquence d'oscillation d'un résonateur obligatoirement non isochrone par l'application d'un couple de freinage diminuant son amplitude d'oscillation.

Pour effectuer une régulation électronique de la fréquence de la génératrice, respectivement de l'oscillateur mécanique, il est prévu dans un mode de réalisation donné que la charge soit formée par un redresseur commutable via un transistor qui recharge une capacité de stockage lors des impulsions de freinage, pour récupérer l'énergie électrique afin d'alimenter le circuit électronique. L'enseignement constant donné dans le document CH 597 636 est le suivant : Lorsque FG > FR le transistor est conducteur ; on prélève alors une puissance Pa sur la génératrice / l'oscillateur. Lorsque FG < FR, le transistor est non-conducteur ; on ne prélève donc plus d'énergie sur la génératrice/l'oscillateur. En d'autres termes, on régule seulement lorsque la fréquence de la génératrice/de l'oscillateur est supérieure à la fréquence de référence FR. Cette régulation consiste à freiner la génératrice/l'oscillateur dans le but de diminuer sa fréquence FG. Ainsi, dans le cas de l'oscillateur mécanique, l'homme du métier comprend qu'une régulation n'est possible que lorsque le ressort de barillet est fortement armé et que la fréquence d'oscillation libre (fréquence propre) de l'oscillateur mécanique est supérieure à la fréquence de référence FR, comme résultat d'un défaut d'isochronisme voulu de l'oscillateur mécanique sélectionné. On a donc un double problème, à savoir l'oscillateur mécanique est sélectionné pour ce qui est normalement un défaut dans un mouvement mécanique et la régulation électronique n'est fonctionnelle que lorsque la fréquence propre de cet oscillateur est supérieure à une fréquence nominale.

La demande de brevet EP 1 521 142 traite également de la régulation électronique d'un balancier-spiral. Le système de régulation proposé dans ce document est similaire dans son fonctionnement général à celui du brevet CH 597 636.

La demande de brevet EP 1 241 538 enseigne que le moment du freinage de l'oscillateur mécanique, au cours d'une alternance d'une quelconque oscillation de ce dernier, permet soit de diminuer la valeur de la période d'oscillation en cours, soit de l'augmenter. Pour ce faire, il est prévu un ensemble électromagnétique aimants-bobines et un circuit de commande qui est agencé pour rendre conducteur ou non les bobines durant certains intervalles de temps déterminés. De manière générale, un freinage de l'oscillateur mécanique, par la génération d'une puissance électrique dans les bobines lors d'un couplage aimants-bobines, au cours d'une période d'oscillation engendre soit une augmentation de la période correspondante lorsque ce freinage intervient avant le passage du résonateur mécanique par son point neutre (position de repos), soit une diminution de la période correspondante lorsque ce freinage intervient après le passage du résonateur mécanique par son point neutre.

Concernant l'implémentation d'une régulation électronique tirant profit de la constatation susmentionnée, le document EP 1 241 538 propose deux réalisations. Dans ces deux réalisations, il est prévu un système piézo-électrique associé à l'échappement pour détecter un basculement de son ancre dans chaque période d'oscillation. Grâce à un tel système de détection, il est prévu, d'une part, de comparer la période d'oscillation avec une période de référence, définie par un oscillateur à quartz, pour déterminer si la marche de la pièce d'horlogerie présente une avance ou un retard et, d'autre part, de déterminer dans une alternance sur deux le passage de l'oscillateur mécanique par son point neutre. Dans la première réalisation, selon que la dérive temporelle correspond à une avance ou un retard, il est prévu de rendre conducteur les bobines durant un certain intervalle de temps respectivement avant ou après le passage par la position neutre de l'oscillateur mécanique dans une alternance. En d'autres termes, il est prévu ici de court-circuiter les bobines avant ou après le passage par la position neutre selon que la régulation requière respectivement une augmentation ou une diminution de la période d'oscillation.

Dans la deuxième réalisation, il est prévu d'alimenter le système de régulation en prenant périodiquement de l'énergie à l'oscillateur mécanique via l'ensemble électromagnétique. A cet effet, les bobines sont reliées à un redresseur qui est agencé pour recharger un condensateur (capacité de stockage), lequel sert de source d'alimentation pour le circuit électronique. L'ensemble électromagnétique est celui donné aux figures 2 et 4 du document et le circuit électronique est représenté schématiquement à la Figure 5 de ce document. Les seules indications données pour le fonctionnement du système de régulation sont les suivantes : 1) les bobines sont rendues conductrices durant des intervalles de temps constants qui sont centrés sur des passages respectifs du résonateur mécanique (balancier-spiral) par sa position neutre (position médiane des alternances) ; 2) durant ces intervalles de temps un courant induit est redressé et stocké dans le condensateur ; et 3) au cours desdits intervalles de temps, la période d'oscillation du balancier-spiral peut être régulée efficacement en ajustant la valeur de la puissance générée par le courant induit, sans autres précisions données.

On peut penser que le choix d'intervalles de conduction des bobines centrés sur les positions neutres du résonateur mécanique a pour objectif de ne pas induire de dérive temporelle parasite dans l'oscillateur mécanique en prélevant de l'énergie à ce dernier pour alimenter le circuit électronique. En rendant conductrices les bobines pour une même durée avant et après le passage par la position neutre, l'auteur pense peut-être équilibrer l'effet d'un freinage précédant un tel passage par la position neutre avec l'effet d'un freinage suivant ce passage pour ainsi ne pas modifier la période d'oscillation en l'absence d'un signal de correction du circuit de régulation intervenant suite à la mesure d'une dérive temporelle. On peut fortement douter qu'il y parvienne avec l'ensemble électromagnétique divulgué et un redresseur classique relié à une capacité de stockage. Premièrement, la recharge de cette capacité de stockage dépend de sa tension initiale au début d'un intervalle de temps donné. Ensuite, la tension induite et le courant induit dans les bobines varient en intensité avec la vitesse angulaire du balancier-spiral, cette intensité diminuant lorsqu'on s'éloigne d'une position neutre où la vitesse angulaire est maximale. L'ensemble électromagnétique divulgué permet de déterminer la forme du signal de tension induite / de courant induit. Bien que la position angulaire des aimants relativement aux bobines pour la position neutre (position de repos) ne soit pas donnée et qu'on ne peut pas déduire un enseignement sur la phase du signal, on peut en déduire que la recharge de la capacité de stockage aura lieu normalement en majeure partie avant le passage par la position neutre. Ainsi, il en résulte un freinage qui n'est pas symétrique relativement à la position neutre et un retard parasite dans la marche de pièce d'horlogerie. Finalement, quant à l'ajustement de la puissance induite au cours des intervalles de temps prévus pour réguler la marche de la pièce d'horlogerie, rien n'est indiqué. On ne comprend pas comment un tel ajustement est effectué, aucun enseignement n'étant donné à ce sujet.

### Résumé de l'invention

Un objectif général, dans le cadre du développement ayant conduit à la présente invention, était de réaliser une pièce d'horlogerie, comprenant un mouvement mécanique avec un oscillateur mécanique et un système de régulation électronique de cet oscillateur mécanique, pour laquelle il ne soit pas nécessaire de dérégler initialement l'oscillateur mécanique pour qu'il avance, de manière à avoir ainsi une pièce d'horlogerie qui a la précision d'un oscillateur électronique auxiliaire (notamment muni d'un résonateur à quartz) lorsque le système de régulation est fonctionnel et, dans le cas contraire, la précision de l'oscillateur mécanique correspondant à son meilleur réglage. En d'autres termes, on cherche à adjoindre une régulation électronique à un mouvement mécanique par ailleurs réglé le plus précisément possible de sorte qu'il reste fonctionnel, avec la meilleure marche possible, lorsque la régulation électronique est non active.

La présente invention a pour objectif premier de fournir une pièce d'horlogerie du type décrit précédemment, mais dans laquelle le système de régulation consomme relativement peu d'énergie électrique et permette ainsi une auto-alimentation efficace de ce système de régulation par une moindre énergie électrique prise à l'oscillateur mécanique de la pièce d'horlogerie, quelle que soit la grandeur d'une dérive temporelle à corriger dans une plage de valeurs qu'il est prévu de pouvoir corriger.

Un autre objectif est de fournir une pièce d'horlogerie du type décrit précédemment qui soit capable, pour un ensemble électromagnétique défini, de fournir une énergie électrique d'alimentation et en continu une tension d'alimentation qui soient suffisantes pour assurer le bon fonctionnement du système de régulation, notamment en l'absence d'une correction d'une dérive temporelle.

Un objectif particulier est de fournir une telle pièce d'horlogerie qui soit capable, pour un ensemble électromagnétique défini, de fournir en continu une tension électrique d'alimentation qui demeure sensiblement maximale quelle que soit la correction d'une dérive temporelle de cette pièce d'horlogerie effectuée par le système de régulation.

Un autre objectif particulier est d'assurer l'auto-alimentation du système de régulation sans induire une dérive temporelle parasite, en particulier en l'absence d'une correction d'une dérive temporelle, ou pour le moins de sorte qu'une telle dérive temporelle parasite éventuelle reste minime et négligeable.

A cet effet, la présente invention concerne une pièce d'horlogerie, comprenant :
- un mécanisme,
- un résonateur mécanique susceptible d'osciller autour d'une position neutre correspondant à son état d'énergie potentielle mécanique minimale, chaque oscillation du résonateur mécanique définissant une période d'oscillation et présentant deux alternances successives chacune entre deux positions extrêmes qui définissent l'amplitude d'oscillation du résonateur mécanique, chaque alternance présentant un passage du résonateur mécanique par sa position neutre à un instant médian et étant constituée d'une première demi-alternance entre un instant initial de cette alternance et son instant médian et d'une seconde demi-alternance entre cet instant médian et un instant final de cette alternance,
- un dispositif d'entretien du résonateur mécanique formant avec ce résonateur mécanique un oscillateur mécanique qui définit la cadence de la marche dudit mécanisme,
- un transducteur électromécanique agencé pour pouvoir convertir de la puissance mécanique de l'oscillateur mécanique en puissance électrique lorsque le résonateur mécanique oscille avec une amplitude comprise dans une plage de fonctionnement utile, ce transducteur électromagnétique étant formé par un ensemble électromagnétique comprenant au moins une bobine, montée sur un élément parmi l'ensemble mécanique constitué du résonateur mécanique et de son support, et au moins un aimant, monté sur l'autre élément de cet ensemble mécanique, l'ensemble électromagnétique étant agencé de manière à pouvoir fournir un signal de tension induite entre les deux bornes de sortie du transducteur électromécanique au moins lorsque le résonateur mécanique oscille avec une amplitude comprise dans ladite plage de fonctionnement utile,
- un convertisseur électrique relié aux deux bornes de sortie du transducteur électromécanique de manière à pouvoir recevoir de ce transducteur électromécanique un courant électrique induit, ce convertisseur électrique comprenant une capacité d'alimentation agencée pour accumuler de l'énergie électrique fournie par le transducteur électromécanique, ce transducteur électromécanique et le convertisseur électrique formant ensemble un dispositif de freinage du résonateur mécanique qui est agencé de manière qu'une quantité d'énergie électrique fournie à la capacité d'alimentation lors d'une recharge est généralement d'autant plus grande que le niveau de tension de cette capacité d'alimentation est bas,
- une charge connectée ou susceptible d'être régulièrement connectée au convertisseur électrique et alimentée par la capacité d'alimentation,
- un dispositif de régulation de la fréquence de l'oscillateur mécanique, ce dispositif de régulation comprenant un oscillateur auxiliaire et un dispositif de mesure agencé pour pouvoir détecter une dérive temporelle éventuelle de l'oscillateur mécanique relativement à l'oscillateur auxiliaire, le dispositif de régulation étant agencé pour pouvoir déterminer si la dérive temporelle mesurée correspond à au moins une certaine avance.

La pièce d'horlogerie selon l'invention est caractérisée en ce que :
- le dispositif de freinage est agencé de manière que, dans chaque période d'oscillation du résonateur mécanique lorsque l'amplitude d'oscillation de ce résonateur mécanique est dans ladite plage de fonctionnement utile, le signal de tension induite présente un premier lobe de tension intervenant au moins en majeure partie dans une première demi-alternance ou dans chacune des deux premières demi-alternances et un deuxième lobe de tension intervenant au moins en majeure partie dans une seconde demi-alternance ou dans chacune des deux secondes demi-alternances ;
- le dispositif de freinage est agencé de manière que, au moins lorsqu'aucune dérive temporelle n'est détectée par le dispositif de mesure et au moins lorsque ladite charge consomme en continu ou de manière quasi continue de l'énergie électrique accumulée dans la capacité d'alimentation lors d'un mode de fonctionnement normal de la pièce d'horlogerie, chaque premier lobe de tension et chaque deuxième lobe de tension est susceptible d'engendrer une impulsion de courant induit qui recharge la capacité d'alimentation ;
- chaque premier lobe de tension présente, en valeur absolue, une première valeur maximale à un premier instant déterminé de la première demi-alternance correspondante et chaque deuxième lobe de tension présente, en valeur absolue, une deuxième valeur maximale à un deuxième instant déterminé de la seconde demi-alternance correspondante, les premiers et deuxièmes lobes de tension définissant, d'une part, des premières zones temporelles situées chacune avant le premier instant déterminé d'un premier lobe de tension différent et après le deuxième instant déterminé du deuxième lobe de tension précédant ce premier lobe de tension et, d'autre part, des deuxièmes zones temporelles situées chacune avant le deuxième instant déterminé d'un deuxième lobe de tension différent et après le premier instant déterminé du premier lobe de tension précédant ce deuxième lobe de tension ;
- le dispositif de régulation comprend un dispositif de pompe de charge agencé pour pouvoir prélever sur commande une charge électrique de la capacité d'alimentation, de manière à diminuer momentanément le niveau de tension de cette capacité d'alimentation ; et
- le dispositif de régulation comprend en outre un circuit logique de commande qui reçoit en entrée un signal de mesure fourni par le dispositif de mesure et qui est agencé pour activer le dispositif de pompe de charge de manière qu'il effectue, lorsque la dérive temporelle mesurée correspond à ladite au moins une certaine avance, un prélèvement d'une première charge électrique de la capacité d'alimentation dans une première zone temporelle, le circuit logique de commande étant en outre agencé pour activer le dispositif de pompe de charge de manière qu'il restitue, dans une phase de fonctionnement normal du dispositif de pompe de charge, au moins partiellement la première charge électrique à la capacité d'alimentation dans une deuxième zone temporelle.

Par 'lobe de tension', on comprend une impulsion de tension qui est située entièrement en-dessus ou entièrement en-dessous d'une valeur nulle (définissant une tension zéro), c'est-à-dire une variation de tension dans un certain intervalle de temps avec soit une tension positive dont la valeur positive monte puis redescend, soit une tension négative dont la valeur négative descend puis remonte.

Le prélèvement d'une première charge électrique dans une première zone temporelle telle que définie est prévu pour augmenter la recharge de la capacité d'alimentation lors de l'apparition d'un premier lobe de tension suivant ce prélèvement, relativement au cas où aucun prélèvement n'aurait lieu. Cette augmentation de la recharge signifie une plus grande énergie mécanique prise à l'oscillateur mécanique par le système de freinage et donc un freinage supérieur de cet oscillateur mécanique. Comme ceci sera exposé par la suite, un freinage dans une première demi-alternance avant le passage du résonateur mécanique par sa position neutre engendre un déphasage temporel négatif dans l'oscillation du résonateur, et ainsi la durée de l'alternance en question est augmentée. On diminue donc momentanément la fréquence instantanée de l'oscillateur mécanique et il en résulte un certain retard dans la marche du mécanisme qui corrige au moins partiellement l'avance détectée par le dispositif de mesure. De plus, une restitution au moins partielle de la première charge électrique à la capacité d'alimentation dans une deuxième zone temporelle telle que définie permet de diminuer la recharge de la capacité d'alimentation lors de l'apparition d'un deuxième lobe de tension suivant cette restitution, relativement au cas où aucune restitution n'aurait lieu. Cette diminution de la recharge signifie une moindre énergie mécanique prise à l'oscillateur mécanique par le dispositif de freinage et donc un freinage inférieur de cet oscillateur mécanique. Comme ceci sera exposé par la suite, un freinage dans une seconde demi-alternance après le passage du résonateur mécanique par sa position neutre engendre un déphasage temporel positif dans l'oscillation du résonateur, et ainsi la durée de l'alternance en question est diminuée. Comme ici on diminue le freinage relativement à un freinage nominal, on diminue aussi momentanément la fréquence instantanée de l'oscillateur mécanique et il en résulte également un certain retard dans la marche du mécanisme qui corrige aussi au moins partiellement l'avance détectée par le dispositif de mesure.

Dans un mode de réalisation préféré, la pièce d'horlogerie est en outre caractérisée en ce que le dispositif de régulation est également agencé pour pouvoir déterminer si la dérive temporelle mesurée correspond à au moins un certain retard ; et en ce que le circuit logique de commande est agencé pour pouvoir activer le dispositif de pompe de charge de manière qu'il effectue, lorsque la dérive temporelle mesurée correspond audit au moins un certain retard, un prélèvement d'une deuxième charge électrique de la capacité d'alimentation dans une deuxième zone temporelle, le circuit logique de commande étant en outre agencé pour pouvoir activer le dispositif de pompe de charge de manière qu'il restitue, dans une phase de fonctionnement normal du dispositif de régulation, au moins partiellement cette deuxième charge électrique à la capacité d'alimentation dans une première zone temporelle.

Le prélèvement d'une deuxième charge électrique dans une deuxième zone temporelle telle que définie est prévu pour augmenter la recharge de la capacité d'alimentation lors de l'apparition d'un deuxième lobe de tension suivant ce prélèvement, relativement au cas où aucun prélèvement n'aurait lieu. Comme on le comprendra par la suite, ceci engendre un déphasage temporel positif dans l'oscillation du résonateur, et ainsi la durée de l'alternance en question est diminuée. On augmente donc momentanément la fréquence instantanée de l'oscillateur mécanique et il en résulte une certaine avance dans la marche du mécanisme qui corrige au moins partiellement le retard détecté par le dispositif de mesure. De plus, une restitution au moins partielle de la deuxième charge électrique à la capacité d'alimentation dans une première zone temporelle telle que définie permet de diminuer la recharge de la capacité d'alimentation lors de l'apparition d'un premier lobe de tension suivant cette restitution, relativement au cas où aucune restitution n'aurait lieu. Cette diminution de la recharge signifie une moindre énergie mécanique prise à l'oscillateur mécanique par le dispositif de freinage et donc un freinage inférieur de cet oscillateur mécanique. Ceci engendre aussi un déphasage temporel positif dans l'oscillation du résonateur, et ainsi la durée de l'alternance en question est également diminuée. On augmente donc momentanément la fréquence instantanée de l'oscillateur mécanique et il en résulte une certaine avance dans la marche du mécanisme qui corrige aussi au moins partiellement le retard détecté par le dispositif de mesure.

Dans un mode de réalisation particulier, le circuit logique de commande est agencé de manière à pouvoir effectuer, lorsque la dérive temporelle mesurée correspond à ladite au moins une certaine avance ou à au moins une avance supérieure à cette dernière, une pluralité de prélèvements de premières charges électriques au cours d'une pluralité de premières zones temporelles respectives. Dans une variante du mode réalisation préféré mentionné précédemment, le circuit logique de commande est en outre agencé de manière à pouvoir effectuer, lorsque la dérive temporelle mesurée correspond audit au moins un certain retard ou à au moins un retard supérieur à ce dernier, une pluralité de prélèvements de deuxièmes charges électriques au cours d'une pluralité de deuxièmes zones temporelles respectives.

Dans une variante générale, la charge connectée ou susceptible d'être régulièrement connectée en sortie du convertisseur électrique est formée notamment par le circuit de régulation. Ceci permet d'avoir un système de régulation autoalimenté par une énergie mécanique prise à l'oscillateur mécanique. Dans un mode préféré, l'ensemble électromagnétique est agencé de manière que, en l'absence d'activation du dispositif de pompe de charge pour corriger une certaine dérive temporelle, un certain déphasage introduit par un freinage de l'oscillateur mécanique lors de l'apparition d'un premier lobe de tension est substantiellement compensé par un autre déphasage de signe mathématique opposé généré par un freinage lors de l'apparition d'un deuxième lobe de tension qui suit.

Un avantage remarquable de la pièce d'horlogerie selon l'invention réside dans le fait qu'une régulation est obtenue lors d'une dérive temporelle détectée dans la marche du mécanisme considéré en prenant un minimum d'énergie à l'oscillateur en sus de l'énergie électrique nécessaire à l'alimentation du circuit électronique formant le dispositif de régulation.

### Brève description des dessins

L'invention sera décrite ci-après de manière plus détaillée à l'aide de dessins annexés, donnés à titre d'exemples nullement limitatifs, dans lesquels :
- La Figure 1 est une vue générale de dessus d'un premier mode de réalisation d'une pièce d'horlogerie selon l'invention,
- La Figure 2 est une vue partielle et agrandie de la pièce d'horlogerie de la Figure 1, montrant l'ensemble électromagnétique formant un transducteur électromagnétique d'un système de régulation incorporé dans cette pièce d'horlogerie,
- La Figure 3 représente, pour un ensemble électromagnétique donné aux Figures 4A à 4C qui correspond au premier mode de réalisation, la tension induite dans la bobine de cet ensemble électromagnétique lorsque le balancier-spiral oscille et l'application d'une première impulsion de freinage dans une certaine alternance avant que le balancier-spiral passe par sa position neutre, ainsi que la vitesse angulaire du balancier et sa position angulaire dans un intervalle temporel dans lequel intervient la première impulsion de freinage,
- Les Figures 4A à 4C montrent, pour le transducteur électromagnétique considéré à la Figure 3, le balancier à trois instants particuliers d'une alternance de l'oscillateur mécanique au cours de laquelle la première impulsion de freinage est fournie,
- La Figure 5 est une figure similaire à celle de la Figure 3 avec l'application d'une deuxième impulsion de freinage dans une certaine alternance après que le balancier-spiral a passé par sa position neutre,
- Les Figures 6A à 6C montrent le balancier à trois instants particuliers d'une alternance de l'oscillateur mécanique au cours de laquelle la deuxième impulsion de freinage est fournie,
- La Figure 7 montre le schéma électrique d'un convertisseur électrique et d'un dispositif de régulation de l'oscillateur mécanique prévus dans le premier mode de réalisation d'une pièce d'horlogerie,
- La Figure 8 montre le circuit électronique d'une pompe de charge formant le dispositif de régulation représenté à la Figure 7,
- La Figure 9 est un organigramme d'un mode de régulation de la marche de la pièce d'horlogerie selon le premier mode de réalisation,
- Les Figures 10A à 10C représentent divers signaux électriques intervenant dans le schéma électrique de la Figure 7,
- La Figure 11 est une vue générale de dessus d'un deuxième mode de réalisation d'une pièce d'horlogerie selon l'invention,
- La Figure 12 est une vue partielle et agrandie de la pièce d'horlogerie de la Figure 11, montrant l'agencement particulier de son transducteur électromagnétique,
- La Figure 13 montre le schéma électrique du convertisseur électrique et du dispositif de régulation de l'oscillateur mécanique tels qu'agencés dans le deuxième mode de réalisation d'une pièce d'horlogerie selon l'invention,
- La Figure 14 montre le circuit électronique de la pompe de charge formant le dispositif de régulation représenté à la Figure 13,
- La Figure 15 est un organigramme d'un mode de régulation de la marche de la pièce d'horlogerie selon le deuxième mode de réalisation, et
- Les Figures 16A à 16C représentent divers signaux électriques intervenant dans le schéma électrique de la Figure 13.

### Description détaillée de l'invention

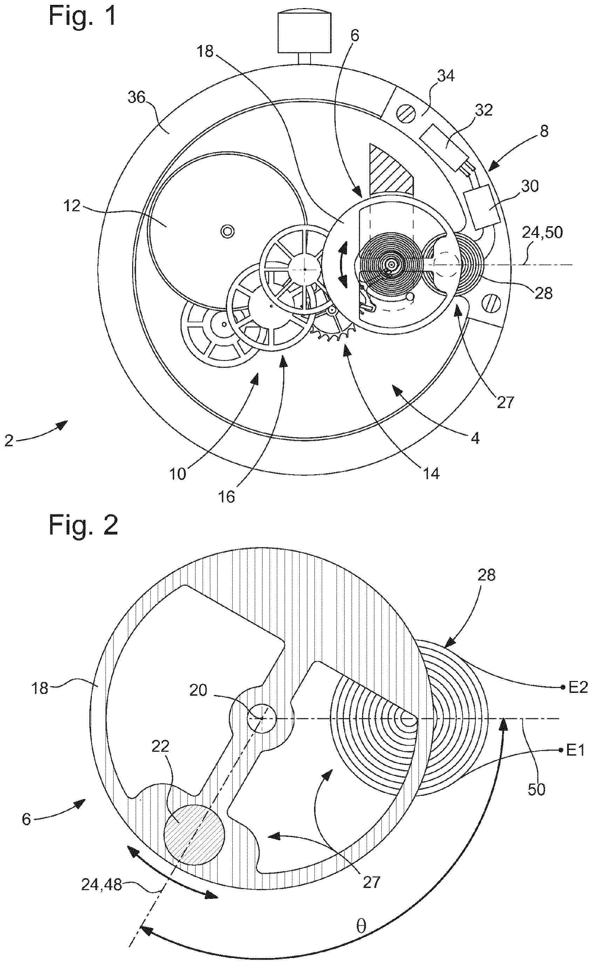

En référence aux Figures 1 et 2, on décrira ci-après une pièce d'horlogerie objet de la présente invention. La Figure 1 est une vue en plan partielle d'une pièce d'horlogerie 2 comprenant un mouvement mécanique 4, équipé d'un résonateur mécanique 6, et un système de régulation 8. Les moyens d'entretien 10 du résonateur mécanique sont classiques. Ils comprennent un barillet 12 avec un ressort-moteur, un échappement 14 formé d'une roue d'échappement et d'une ancre à palettes, ainsi qu'un rouage intermédiaire 16 reliant cinématiquement le barillet à la roue d'échappement. Le résonateur 6 comprend un balancier 18 et un ressort-spiral usuel, le balancier étant monté pivotant autour d'un axe de rotation 20 entre une platine et un pont. Le résonateur mécanique 6 et les moyens d'entretien 10 (aussi nommés moyens d'excitation) forment ensemble un oscillateur mécanique. On notera que, en général, on ne retient dans la définition d'un oscillateur mécanique horloger que l'échappement comme moyen d'entretien/moyen d'excitation de cet oscillateur mécanique, la source d'énergie et un train d'engrenage intermédiaire étant considérés séparément. Le balancier-spiral oscille autour de l'axe 20 lorsqu'il reçoit des impulsions mécaniques de l'échappement dont la roue d'échappement est entraînée par le barillet. Le rouage 16 fait partie d'un mécanisme du mouvement horloger dont la marche est cadencée par l'oscillateur mécanique. Ce mécanisme comprend, outre le rouage 16, d'autres mobiles et des indicateurs analogiques (non représentés) reliés cinématiquement à ce rouage 16, le déplacement de ces indicateurs analogiques étant rythmé par l'oscillateur mécanique. Divers mécanismes connus de l'homme du métier peuvent être prévus.

La Figure 2 est une vue partielle de la Figure 1, en coupe horizontale au niveau du balancier 18, montrant un aimant 22 et une bobine 28 formant un ensemble électromagnétique 27 selon l'invention. La bobine 28 est de préférence du type galette (forme de disque ayant une épaisseur relativement petite). Elle est agencée sur la platine du mouvement horloger et comprend classiquement deux extrémités de connexion E1 et E2. De manière générale, l'ensemble électromagnétique comprend au moins une bobine et une structure aimantée formée d'au moins un aimant générant un flux magnétique, en direction d'un plan général de la bobine, qui passe au travers de celle-ci lorsque le résonateur mécanique oscille avec une amplitude comprise dans une plage de fonctionnement utile. Dans l'exemple représenté, le balancier 18 porte, de préférence dans une zone située à proximité de son diamètre extérieur défini par sa serge, l'aimant bipolaire 22 qui présente un axe d'aimantation orienté axialement. On remarquera qu'il est préférable de confiner le flux magnétique de l'aimant ou des aimants portés par le balancier à l'aide d'un blindage formé par des parties du balancier, en particulier par des parties magnétiques agencées des deux côtés de l'aimant ou des aimants selon la direction axiale de manière que la bobine soit partiellement située entre ces deux parties magnétiques.

Le balancier 18 définit un demi-axe 24, depuis son axe de rotation 20 et perpendiculairement à ce dernier qui passe au centre de l'aimant 22. Lorsque le balancier-spiral est dans sa position de repos, le demi-axe 24 définit une position neutre (position angulaire de repos du balancier-spiral correspondant à un angle zéro) autour de laquelle le balancier-spiral peut osciller à une certaine fréquence, notamment à une fréquence libre F0 correspondant à la fréquence d'oscillation naturelle de l'oscillateur mécanique, c'est-à-dire non soumis à des couples de force externes (autres que celui fourni périodiquement via l'échappement). A la Figure 2, le résonateur mécanique 6 (représenté sans son spiral qui est situé au-dessus du plan de coupe) est représenté dans sa position neutre, correspondant à son état d'énergie mécanique potentielle minimale. On remarque que, dans la position neutre, le demi-axe 24 définit un demi-axe de référence 48 qui est décalé angulairement d'un angle θ relativement au demi-axe fixe 50 qui intercepte perpendiculairement l'axe de rotation 20 et l'axe central de la bobine 28. En d'autres termes, en projection dans le plan général du balancier, le centre de la bobine 28 présente un décalage angulaire θ relativement au demi-axe de référence 48. A la Figure 2, ce décalage angulaire vaut 120° en valeur absolue. De préférence, le décalage angulaire θ est compris entre 30° et 120° en valeur absolue.

Chaque oscillation du résonateur mécanique définit une période d'oscillation et elle présente une première alternance suivie d'une deuxième alternance chacune entre deux positions extrêmes définissant l'amplitude d'oscillation du résonateur mécanique (à noter que l'on considère ici le résonateur oscillant et donc l'oscillateur mécanique dans son ensemble, l'amplitude d'oscillation du balancier-spiral étant définie entre autres choses par les moyens d'entretien). Chaque alternance présente un passage du résonateur mécanique par sa position neutre à un instant médian et une certaine durée entre un instant initial et un instant final qui sont définis respectivement par les deux positions extrêmes occupées par le résonateur mécanique respectivement au début et à la fin de cette alternance. Chaque alternance est ainsi constituée d'une première demi-alternance se terminant audit instant médian et d'une seconde demi-alternance débutant à cet instant médian.

Le système 8 de régulation de la fréquence de l'oscillateur mécanique comprend un circuit électronique 30 et un oscillateur auxiliaire 32, cet oscillateur auxiliaire comprenant un circuit d'horloge et par exemple un résonateur à quartz relié à ce circuit d'horloge. On notera que dans une variante, l'oscillateur auxiliaire est intégré au moins partiellement dans le circuit électronique. Le système de régulation comprend en outre l'ensemble électromagnétique 27 décrit précédemment, à savoir la bobine 28 qui est reliée électriquement au circuit électronique 30 et l'aimant bipolaire 22 monté sur le balancier. De manière avantageuse, les divers éléments du système de régulation 8, à l'exception de l'aimant, sont agencés sur un support 34 avec lequel ils forment un module mécaniquement indépendant du mouvement horloger. Ainsi, ce module peut être assemblé ou associé au mouvement mécanique 4 que lors de leur montage dans une boîte de montre. En particulier, comme représenté à la Figure 1, le module susmentionné est fixé à un cercle d'emboîtage 36 qui entoure le mouvement horloger. On comprend que le module de régulation peut donc être associé au mouvement horloger une fois ce dernier entièrement monté et réglé, le montage et démontage de ce module pouvant intervenir sans devoir intervenir sur le mouvement mécanique lui-même.

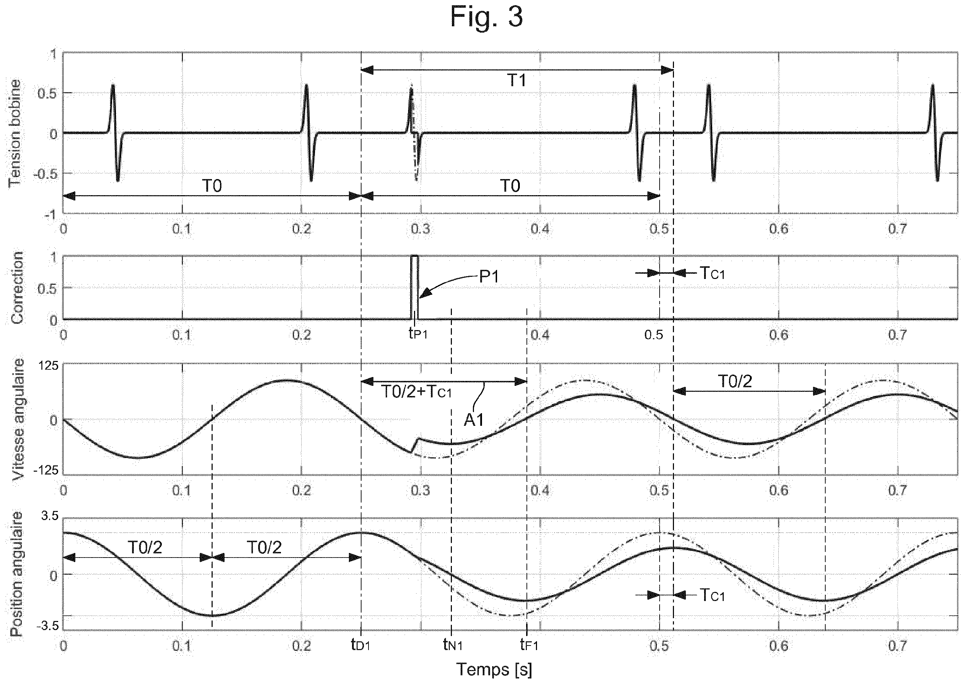

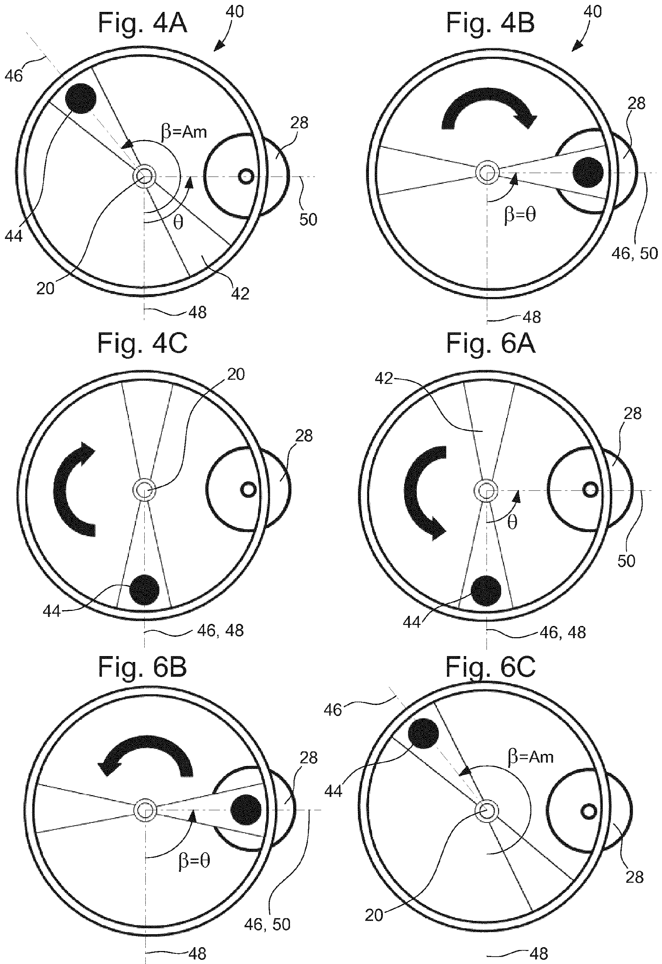

En référence aux Figures 3 à 6C, on décrira premièrement le phénomène physique sur lequel se fonde le principe de régulation implémenté dans la pièce d'horlogerie selon l'invention. On considère ici une pièce d'horlogerie semblable à celle de la Figure 1. Le résonateur mécanique 40, dont seul le balancier 42 a été représenté aux Figures 4A-4C et 6A-6C, porte un seul aimant bipolaire 44 dont l'axe d'aimantation est sensiblement parallèle à l'axe de rotation 20 du balancier, c'est-à-dire avec une orientation axiale. Dans ce cas, le demi-axe considéré 46 du résonateur mécanique 40 passe par le centre de rotation 20 et le centre de l'aimant 44. Dans l'exemple traité ici, l'angle θ entre le demi-axe de référence 48 et le demi-axe 50 a une valeur d'environ 90°. Les deux demi-axes 48 et 50 sont fixes relativement au mouvement horloger, alors que le demi-axe 46 oscille avec le balancier et donne la position angulaire β de l'aimant monté sur ce balancier relativement au demi-axe de référence, ce dernier définissant la position angulaire zéro pour le résonateur mécanique. Plus généralement, le décalage angulaire θ est tel qu'un signal de tension induite généré dans la bobine au passage de l'aimant en regard de cette bobine est situé, lors d'une première alternance d'une quelconque oscillation, avant le passage du demi-axe médian par le demi-axe de référence (donc dans une première demi-alternance) et, lors d'une seconde alternance d'une quelconque oscillation, après le passage de ce demi-axe médian par le demi-axe de référence (donc dans une seconde demi-alternance).

La Figure 3 montre quatre graphes. Le premier graphe donne la tension dans la bobine 28 en fonction du temps lorsque le résonateur 40 oscille, c'est-à-dire lorsque l'oscillateur mécanique est activé. Le deuxième graphe indique l'instant t_{P1} auquel une impulsion de freinage est appliquée au résonateur 40 pour effectuer une correction dans la marche du mécanisme cadencé par l'oscillateur mécanique. L'instant de l'application d'une impulsion de forme rectangulaire (c'est-à-dire d'un signal binaire) est considéré ici comme la position temporelle du milieu de cette impulsion. On observe une variation de la période d'oscillation au cours de laquelle interviennent l'impulsion de freinage et donc une variation ponctuelle de la fréquence de l'oscillateur mécanique. De fait, comme on le voit sur les deux derniers graphes de la Figure 3, qui montrent respectivement la vitesse angulaire (valeurs en radian par seconde : [rad/s]) et la position angulaire (valeurs en radian : [rad]) du balancier au cours du temps, la variation temporelle concerne la seule alternance au cours de laquelle intervient l'impulsion de freinage. On notera que chaque oscillation présente deux alternances successives qui sont définies dans le présent texte comme les deux demi-périodes au cours desquelles le balancier subit respectivement un mouvement d'oscillation dans un sens et ensuite un mouvement d'oscillation dans l'autre sens. En d'autres termes, comme déjà exposé, une alternance correspond à un balancement du balancier dans un sens ou l'autre sens entre ses deux positions extrêmes définissant l'amplitude d'oscillation.

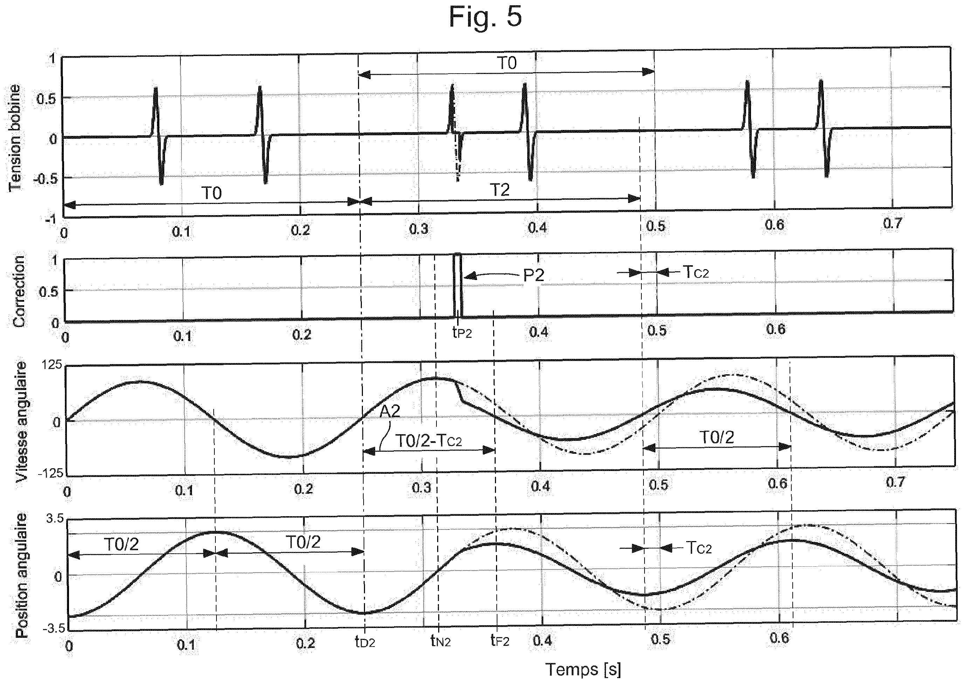

Par impulsion de freinage, on comprend une application, substantiellement durant un intervalle de temps limité, d'un certain couple de force au résonateur mécanique pour le freiner, c'est-à-dire d'un couple de force qui s'oppose au mouvement d'oscillation de ce résonateur mécanique. De manière générale, le couple de freinage peut être de natures diverses, notamment magnétique, électrostatique ou mécanique. Dans le mode de réalisation décrit, le couple de freinage est obtenu par le couplage aimant-bobine et il correspond donc à un couple magnétique de freinage exercé sur l'aimant 44 via la bobine 28 qui est commandée par un dispositif de régulation. De telles impulsions de freinage peuvent par exemple être générées en court-circuitant momentanément la bobine. Cette action est reconnaissable sur le graphe de la tension de bobine dans la zone temporelle au cours de laquelle l'impulsion de freinage est appliquée, cette zone temporelle étant prévue lors de l'apparition d'une impulsion de tension induite dans la bobine par le passage de l'aimant. C'est évidemment dans cette zone temporelle que le couplage aimant-bobine permet une action sans contact via un couple magnétique sur l'aimant fixé au balancier. On observe en effet que la tension de bobine descend vers zéro au cours d'une impulsion de freinage par court-circuit (la tension induite dans la bobine 28 par l'aimant 44 étant représentée en traits interrompus dans la zone temporelle susmentionnée). A noter que les impulsions de freinage par court-circuit représentées aux Figures 3 et 5 sont mentionnées ici dans le cadre des explications données, car la présente invention prévoit une récupération de l'énergie de freinage pour alimenter notamment le dispositif de régulation.

Dans les Figures 3 et 5, la période d'oscillation T0 correspond à une oscillation 'libre' (c'est-à-dire sans application d'impulsions de régulation) de l'oscillateur mécanique. Chacune des deux alternances d'une période d'oscillation a une durée T0/2 sans perturbation ou contrainte extérieure (notamment par une impulsion de régulation). Le temps t = 0 marque le début d'une première alternance. On notera que la fréquence 'libre' F0 de l'oscillateur mécanique est ici approximativement égale à quatre Hertz (F0 = 4 Hz), de sorte que la période T0 = 250 ms environ.

En référence aux Figures 3 et 4A - 4C, on décrira le comportement de l'oscillateur mécanique dans un premier cas. Après une première période T0 commence une nouvelle période T1, respectivement une nouvelle alternance A1 au cours de laquelle intervient une impulsion de freinage P1. A l'instant initial t_{D1} débute l'alternance A1, le résonateur 40 étant alors dans l'état de la Figure 4A où l'aimant 44 occupe une position angulaire β correspondant à une position extrême (position angulaire positive maximale Aₘ). Ensuite intervient l'impulsion de freinage P1 à l'instant t_{P1} qui est situé avant l'instant médian t_{N1} auquel le résonateur passe par sa position neutre, les Figures 4B, 4C représentant le résonateur respectivement aux deux instants successifs t_{P1} et t_{N1}. Finalement l'alternance A1 se termine à l'instant final t_{F1}.

Dans le premier cas, l'impulsion de freinage est générée entre le début d'une alternance et le passage du résonateur par sa position neutre, c'est-à-dire dans une première demi-alternance de cette alternance. Comme prévu, la vitesse angulaire en valeur absolue diminue au moment de l'impulsion de freinage P1. Ceci induit un déphasage temporel négatif T_{C1} dans l'oscillation du résonateur, comme le montrent les deux graphes de la vitesse angulaire et de la position angulaire à la Figure 3, soit un retard relativement au signal théorique non perturbé (représenté en traits interrompus). Ainsi, la durée de l'alternance A1 est augmentée d'un intervalle de temps T_{C1}. La période d'oscillation T1, comprenant l'alternance A1, est donc prolongée relativement à la valeur T0. Ceci engendre une diminution ponctuelle de la fréquence de l'oscillateur mécanique et un ralentissement momentané de la marche du mécanisme associé.

En référence aux Figures 5 et 6A - 6C, on décrira le comportement de l'oscillateur mécanique dans un deuxième cas. Les graphes de la Figure 5 représentent l'évolution temporelle des mêmes variables qu'à la Figure 3. Après une première période T0 commence une nouvelle période T2, respectivement une alternance A2 au cours de laquelle intervient une impulsion de freinage P2. A l'instant initial t_{D2} débute l'alternance A2, le résonateur 40 étant alors dans une position extrême (position angulaire négative maximale non représentée). Après un quart de période (T0/4) correspondant à une première demi-alternance, le résonateur atteint sa position neutre à l'instant médian t_{N2} (configuration représentée à la Figure 6A). Ensuite intervient l'impulsion de freinage P2 à l'instant t_{P2} qui est situé après l'instant médian t_{N2} auquel le résonateur passe par sa position neutre dans l'alternance A2, c'est-à-dire dans une seconde demi-alternance de cette alternance. Finalement, cette alternance se termine à l'instant final t_{F2} auquel le résonateur occupe à nouveau une position extrême (position angulaire positive maximale). Les Figures 6B et 6C représentent le résonateur respectivement aux deux instants successifs t_{N2} et t_{F2}. On remarquera en particulier que la configuration de la Figure 6A se distingue de la configuration de la Figure 4C par les sens inverses des mouvements d'oscillation respectifs. En effet, à la Figure 4C, le balancier tourne dans un sens horaire lorsqu'il passe par la position neutre dans l'alternance A1, alors qu'à la Figure 6A ce balancier tourne dans le sens antihoraire lors du passage par la position neutre dans l'alternance A2.

Dans le deuxième cas considéré, l'impulsion de freinage est donc générée, dans une alternance, entre l'instant médian auquel le résonateur passe par sa position neutre et l'instant final auquel se termine cette alternance. Comme prévu, la vitesse angulaire en valeur absolue diminue au moment de l'impulsion de freinage P2. De manière remarquable, l'impulsion de freinage induit ici un déphasage temporel positif T_{C2} dans la période d'oscillation du résonateur, comme le montrent les deux graphes de la vitesse angulaire et de la position angulaire à la Figure 5, soit une avance relativement au signal théorique non perturbé (représenté en traits interrompus). Ainsi, la durée de l'alternance A2 est diminuée de l'intervalle de temps T_{C2}. La période d'oscillation T2 comprenant l'alternance A2 est donc plus courte que la valeur T0. Ceci engendre par conséquent une augmentation 'ponctuelle' de la fréquence instantanée de l'oscillateur mécanique et une accélération momentanée de la marche du mécanisme associé.

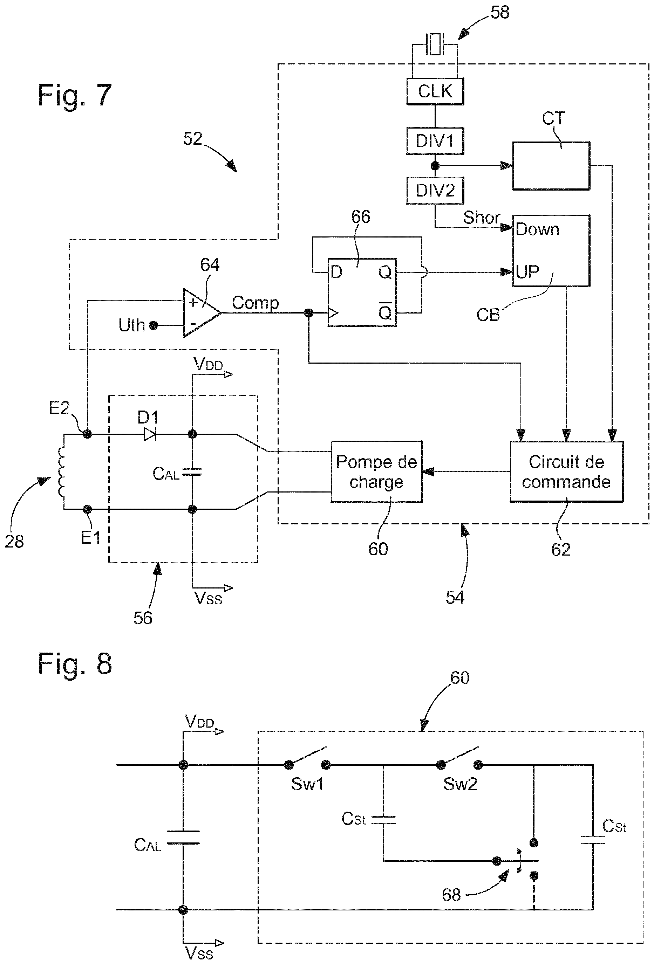

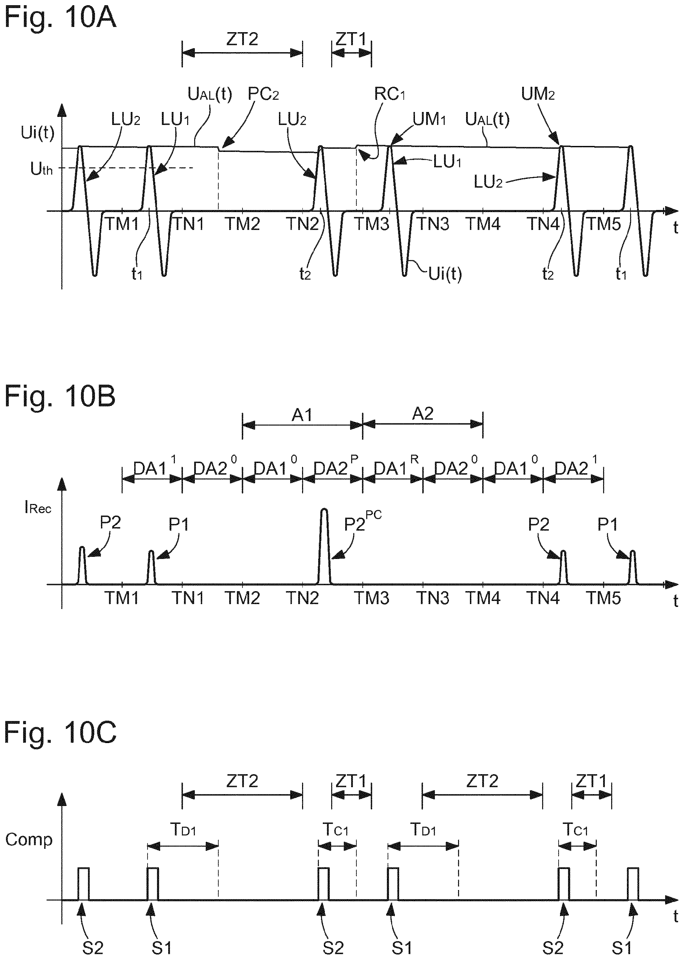

En référence aux Figures 1 et 2 déjà décrites et aux Figures 7 à 10C, on décrira ci-après un premier mode de réalisation d'une pièce d'horlogerie selon l'invention. Cette pièce d'horlogerie 2 comprend :
- un mécanisme 12,16 (montré partiellement),
- un résonateur mécanique 6 (balancier-spiral) susceptible d'osciller autour d'une position neutre 48 correspondant à son état d'énergie potentielle mécanique minimale, chaque alternance des oscillations successives présentant un passage du résonateur mécanique par sa position neutre à un instant médian et étant constituée d'une première demi-alternance se terminant à son instant médian et d'une seconde demi-alternance débutant à son instant médian,
- un dispositif d'entretien 14 du résonateur mécanique formant avec ce résonateur mécanique un oscillateur mécanique qui cadence la marche du mécanisme,
- un transducteur électromécanique agencé pour pouvoir convertir de la puissance mécanique de l'oscillateur mécanique en puissance électrique lorsque le résonateur mécanique 6 oscille avec une amplitude comprise dans une plage de fonctionnement utile, ce transducteur électromagnétique étant formé par un ensemble électromagnétique 27 comprenant une bobine 28 (seul élément de l'ensemble électromagnétique représenté schématiquement à la Figure 7), montée sur le support (en particulier la platine du mouvement 4) du résonateur mécanique, et un aimant 22 monté sur ce résonateur mécanique, l'ensemble électromagnétique 27 étant agencé de manière à pouvoir fournir un signal de tension induite Uᵢ(t) (Fig.10A), entre les deux bornes de sortie E1 et E2 du transducteur électromécanique lorsque le résonateur mécanique oscille avec une amplitude comprise dans la plage de fonctionnement utile,
- un convertisseur électrique 56 relié aux deux bornes de sortie du transducteur électromécanique de manière à pouvoir recevoir de ce transducteur électromécanique un courant électrique induit I_{Rec} (Fig.10B), ce convertisseur électrique comprenant une capacité d'alimentation C_{AL} agencée pour accumuler de l'énergie électrique fournie par le transducteur électromécanique, ce transducteur électromécanique et le convertisseur électrique formant ensemble un dispositif de freinage du résonateur mécanique,
- un dispositif de régulation 52 de la fréquence de l'oscillateur mécanique, ce dispositif de régulation comprenant un oscillateur auxiliaire 58 & CLK et un dispositif de mesure agencé pour pouvoir mesurer une dérive temporelle éventuelle de l'oscillateur mécanique relativement à l'oscillateur auxiliaire, le dispositif de régulation étant agencé pour pouvoir déterminer si la dérive temporelle mesurée correspond à au moins une certaine avance ou à au moins un certain retard.

De préférence, l'ensemble électromagnétique 27 forme également en partie le dispositif de mesure. Ce dispositif de mesure comprend en outre un compteur bidirectionnel CB et un comparateur 64 (du type Schmidt trigger). Le comparateur reçoit à une entrée le signal de tension induite Uᵢ(t) et à l'autre entrée un signal de tension de seuil Uₜₕ dont la valeur est positive dans l'exemple donné. Comme le signal de tension induite Uᵢ(t) présente dans chaque période d'oscillation du résonateur 6 deux lobes positifs (Fig.10A) dépassant la valeur Uₜₕ, le comparateur fournit en sortie un signal 'Comp' présentant deux impulsions S1 et S2 (Fig.10C) par période d'oscillation. Ce signal 'Comp' est fourni d'une part à un circuit logique de commande 62 et d'autre part à une bascule 66 qui inhibe une impulsion sur deux de manière à fournir une seule impulsion par période d'oscillation à une première entrée 'UP' du compteur bidirectionnel CB. Le compteur bidirectionnel comprend une deuxième entrée 'Down' qui reçoit un signal d'horloge Sₕₒᵣ à une fréquence nominale / fréquence de consigne pour la fréquence d'oscillation, ce signal d'horloge étant dérivé de l'oscillateur auxiliaire qui fournit un signal digital de référence définissant une fréquence de référence. L'oscillateur auxiliaire comprend un circuit d'horloge CLK servant à exciter le résonateur à quartz 58 et à fournir en retour le signal de référence qui est composé d'une succession d'impulsions correspondant respectivement aux périodes d'oscillation du résonateur à quartz.

Le circuit d'horloge fournit son signal de référence à un diviseur DIV1 & DIV2 qui divise le nombre d'impulsions dans ce signal de référence par le rapport entre la période nominale de l'oscillateur mécanique et la période de référence nominale de l'oscillateur auxiliaire. Le diviseur fournit ainsi un signal d'horloge Sₕₒᵣ définissant une fréquence de consigne (par exemple 4Hz) et présentant une impulsion par période de consigne (par exemple 250 ms) au compteur CB. Ainsi, l'état du compteur CB détermine l'avance (si le nombre est positif) ou le retard (si le nombre est négatif) accumulé(e) au cours du temps par l'oscillateur mécanique relativement à l'oscillateur auxiliaire avec une résolution correspondant sensiblement à une période de consigne. L'état du compteur est fourni à un circuit logique de commande 62 qui est agencé pour déterminer si cet état correspond à au moins une certaine avance (CB > N1, N1 étant un nombre naturel) ou à au moins un certain retard (CB < -N2, N2 étant un nombre naturel).

Le convertisseur électrique 56 comprend un circuit d'accumulation d'énergie électrique D1 & C_{AL} qui est agencé, dans la variante décrite, pour pouvoir recharger la capacité d'alimentation C_{AL} seulement avec une tension positive en entrée du convertisseur électrique, c'est-à-dire seulement avec une tension induite positive fournie par la bobine 28. Lors d'une recharge de la capacité d'alimentation, la quantité d'énergie électrique fournie par le dispositif de freinage à cette capacité d'alimentation est d'autant plus grande que le niveau de tension de cette capacité d'alimentation est bas. Une charge est connectée ou susceptible d'être régulièrement connectée au convertisseur électrique 56 et alimentée par la capacité d'alimentation qui fournit la tension d'alimentation U_{AL}(t) entre les deux bornes d'alimentation V_{DD} et V_{SS}, cette charge comprenant notamment le circuit de régulation 54.

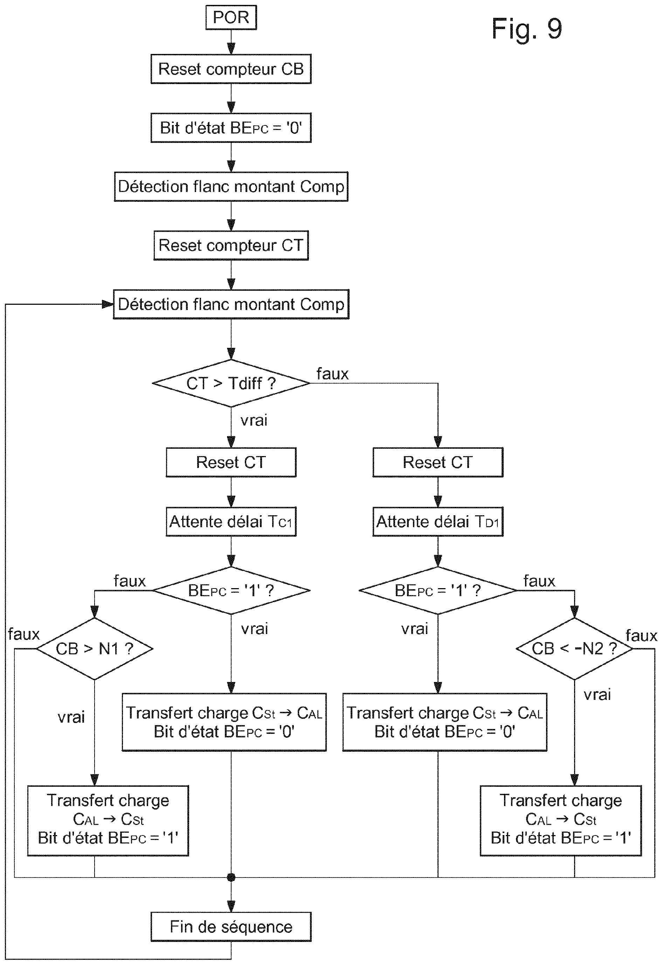

La pièce d'horlogerie 2 est remarquable par le fait que le circuit de régulation 54 du dispositif de régulation comprend une pompe de charge 60 agencée pour pouvoir transférer sur commande une certaine charge électrique de la capacité d'alimentation C_{AL} dans les deux capacités commutables C_{St} de la pompe de charge, et inversement. Une variante de réalisation d'une telle pompe de charge est représentée à la Figure 8. Cette pompe de charge comprend un interrupteur d'entrée Sw1 et un circuit de stockage d'une certaine charge électrique comprenant un interrupteur Sw2, un commutateur 68 et deux capacités C_{St} de stockage temporaire. Pour transférer une charge électrique de la capacité d'alimentation dans les capacités C_{St}, on relie ces dernières en parallèle. Ensuite, pour restituer sensiblement cette charge électrique à la capacité d'alimentation, on relie les deux capacités C_{St} en série. Les interrupteurs Sw1, Sw2 et le commutateur 68 sont commandés par le circuit logique de commande 62 selon un procédé de régulation (Figure 9) implémenté dans le premier mode de réalisation de la pièce d'horlogerie selon l'invention et qui sera décrit par la suite.

Aux Figures 10A et 10B, le signal de tension induite Ui(t) correspond à celui généré par l'ensemble électromagnétique 27 associé au résonateur mécanique 6 lorsque ce dernier oscille dans une plage de fonctionnement utile. Sur l'axe du temps [t] sont indiqués les instants médians TNn, n = 0, 1, 2, ..., correspondant aux passages successifs du résonateur mécanique par sa position neutre, ainsi que les instants TMn, n = 0, 1, 2, ..., correspondant aux passages successifs du résonateur mécanique alternativement par ses deux positions extrêmes où sa vitesse angulaire est nulle et le sens de son balancement s'inverse. Selon l'invention, le dispositif de freinage 27 & 56 est agencé de manière que, dans chaque période d'oscillation du résonateur mécanique 6 au moins lorsque l'amplitude d'oscillation de ce résonateur mécanique est dans la plage de fonctionnement utile, le signal de tension induite Ui(t) présente un premier lobe de tension LU₁ intervenant dans une première demi-alternance DA1¹, DA1^{R} et un deuxième lobe de tension LU₂ intervenant dans une seconde demi-alternance DA2¹, DA2^{P}. Le signal de tension induite présente ainsi alternativement une succession de premiers lobes de tension LU₁ et de deuxièmes lobes de tension LU₂. Chaque premier lobe de tension LU₁ présente une première valeur maximale UM₁ à un premier instant t₁ de la première demi-alternance correspondante et chaque deuxième lobe de tension LU₂ présente une deuxième valeur maximale UM₂ à un deuxième instant t₂ de la seconde demi-alternance correspondante.

Les premiers et deuxièmes lobes de tension définissent, d'une part, des premières zones temporelles ZT1 situées chacune avant le premier instant t₁ d'un premier lobe de tension différent et après le deuxième instant t₂ du deuxième lobe de tension précédant ce premier lobe de tension et, d'autre part, des deuxièmes zones temporelles ZT2 situées chacune avant le deuxième instant t₂ d'un deuxième lobe de tension différent et après le premier instant t₁ du premier lobe de tension précédant ce deuxième lobe de tension. Les premiers lobes de tension LU₁ génèrent des impulsions S1 dans le signal 'Comp' en sortie du comparateur 64, alors que les deuxièmes lobes de tension LU₂ génèrent des impulsions S2 dans ce signal 'Comp' (Fig.10C). Dans la variante représentée à la Figure 10A, les lobes considérés pour la génération des signaux S1 et S2 sont les lobes de tension positive car la tension de seuil Uₜₕ a été choisie positive. Dans une variante qui ne sera pas décrite plus en détail par la suite, on peut choisir une tension de seuil négative fournie à l'entrée '+' du comparateur 64 (le signal de tension induite étant alors fourni à son entrée '-') et ce sont alors les lobes de tension négative qui génèrent les signaux S1 et S2.

Ensuite, le dispositif de freinage est agencé de manière que, au moins lorsqu'aucune dérive temporelle n'est détectée par le dispositif de mesure et au moins lorsque la charge connectée aux bornes V_{SS} et V_{DD} consomme en continu ou de manière quasi continue de l'énergie électrique accumulée dans la capacité d'alimentation C_{AL} (lors d'une phase de fonctionnement normal de la pièce d'horlogerie, comme représenté à la Figure 10A où la tension d'alimentation U_{AL}(t) présente une certaine pente négative en l'absence de correction du fonctionnement de l'oscillateur mécanique), les premiers lobes de tension LU₁ et les deuxièmes lobes de tension LU₂ engendrent alternativement des impulsions de courant induit P1 et P2 (Fig.10B) qui rechargent la capacité d'alimentation . On remarquera que le convertisseur électrique 56 comprend une diode D1 agencée de sorte que seuls les lobes de tension positive sont susceptibles de recharger la capacité C_{AL}. Cependant, dans une variante qui ne sera pas décrite plus en détail par la suite, le convertisseur électrique peut avoir une diode agencée de manière à définir un redresseur simple alternance de sorte que ce sont alors les lobes de tension négative qui sont susceptibles de recharger la capacité C_{AL}. Dans ce cas, ce sont ainsi les lobes de tension négative qui engendrent les impulsions de courant induit et qui sont considérés pour déterminer les zones temporelles de prélèvement d'une certaine charge électrique et de restitution substantielle de cette charge électrique en fonction de la dérive temporelle mesurée, comme exposé ci-après. On notera que dans une autre variante, le convertisseur peut comprendre un convertisseur double alternance. Dans ce cas, on obtient à chaque passage de l'aimant 22 devant la bobine 28 une première paire de premiers lobes de tension consécutifs ou une deuxième paire de deux deuxième lobes de tension consécutifs ayant tous sensiblement une même amplitude. On obtient donc des doublons des premiers de deuxièmes lobes de tension décrits ci-avant. Ce cas particulier doit être traité en relation avec l'exposé ci-dessus en prenant les premières et deuxièmes paires de lobes de tension en lieu et place des premiers et deuxièmes lobes de tension, et en prenant pour déterminer les premières et deuxièmes zones temporelles ZT1 et ZT2 les temps t₁ et t₂ des deux lobes adjacents parmi deux paires qui se succèdent.

La pompe de charge 60 est agencée pour pouvoir prélever sur commande une certaine charge électrique de la capacité d'alimentation C_{AL}, de manière à diminuer momentanément le niveau de tension U_{AL}(t) de la capacité d'alimentation. Dès que la capacité d'alimentation C_{AL} a été suffisamment chargée pour pouvoir alimenter le circuit de régulation 54, le circuit logique de commande 62 reçoit en entrée un signal de mesure fourni par le dispositif de mesure, à savoir du compteur bidirectionnel CB. Ce circuit logique de commande est agencé pour activer la pompe de charge 60 de manière qu'elle effectue, lorsque la dérive temporelle mesurée correspond à au moins une certaine avance (CB > N1), un prélèvement d'une première charge électrique de la capacité d'alimentation C_{AL} dans une première zone temporelle ZT1. Il en résulte une baisse de la tension U_{AL}(t). Le circuit logique de commande 62 est en outre agencé pour activer la pompe de charge de manière qu'elle restitue au moins en majeure partie ladite première charge électrique à la capacité d'alimentation dans une deuxième zone temporelle ZT2. Il en résulte alors une augmentation de la tension U_{AL}(t). De même, le circuit logique de commande est agencé pour activer la pompe de charge 60 de manière qu'elle effectue, lorsque la dérive temporelle mesurée correspond à au moins un certain retard (CB < -N2), un prélèvement d'une deuxième charge électrique de la capacité d'alimentation C_{AL} dans une deuxième zone temporelle ZT2, pour baisser la tension U_{AL}(t), et de manière que cette pompe de charge restitue au moins en majeure partie ladite deuxième charge électrique à la capacité d'alimentation dans une première zone temporelle ZT1 pour alors augmenter la tension U_{AL}(t).

Dans le premier mode de réalisation, la pompe de charge comprend au moins deux capacités de stockage temporaire ainsi que des interrupteurs et au moins un commutateur pouvant être commandés par le circuit logique de commande de manière à soit agencer les au moins deux capacités de stockage temporaire en parallèle, soit agencer ces au moins deux capacités de stockage temporaire en série. La première charge électrique et la deuxième charge électrique qui sont chacune prélevées de la capacité d'alimentation sont chacune conservées temporairement dans les au moins deux capacités de stockage temporaire jusqu'à la restitution substantielle de cette première charge électrique, respectivement de cette deuxième charge électrique à la capacité d'alimentation.

De préférence, la deuxième zone temporelle ZT2, au cours de laquelle intervient la restitution au moins partielle d'une première charge électrique à la capacité d'alimentation, est celle qui intervient en premier lieu après la première zone temporelle ZT1 au cours de laquelle intervient le prélèvement de cette première charge électrique. De même, la première zone temporelle ZT1, au cours de laquelle intervient la restitution au moins partielle d'une deuxième charge électrique à la capacité d'alimentation, est celle qui intervient en premier lieu après la deuxième zone temporelle ZT2 au cours de laquelle intervient le prélèvement de cette deuxième charge électrique.

Le procédé de régulation implémenté dans le premier mode de réalisation de l'invention est donné sous forme d'organigramme à la Figure 9. Après une initialisation du circuit de régulation à 'POR', on réinitialise le compteur CB et le bit d'état BE_{PC}, ce dernier indiquant l'état de la pompe de charge (BE_{PC} = '0' indique que les deux capacités commutables C_{St} sont dans un état propre à pouvoir prélever une certaine charge électrique de la capacité d'alimentation, alors que BE_{PC} = '1' indique que les deux capacités commutables C_{St} ont reçu une certaine charge de la capacité d'alimentation et sont donc dans un état propre à pouvoir restituer substantiellement cette certaine charge électrique à la capacité d'alimentation). Ensuite, on attend la détection d'un flanc montant d'une impulsion S1 ou S2 fournie par le comparateur 64 dans le signal 'Comp' (voir Fig.10C) qu'il transmet au circuit logique de commande 62, et on initialise alors le compteur temporel CT. Ensuite, on attend la détection du flanc montant suivant dans le signal 'Comp' (deuxième flanc montant d'une impulsion S2 ou S1).

Dès la détection du deuxième flanc montant susmentionné dans le signal 'Comp', le circuit logique 62 transfert l'état/la valeur du compteur temporel CT dans un registre et compare cette valeur à une valeur de différentiation Tdiff qui est sélectionnée inférieure à un premier intervalle de temps entre une première impulsion S1 et une deuxième impulsion S2 et supérieure à un deuxième intervalle de temps entre une deuxième impulsion S2 et une première impulsion S1. Dès le transfert de l'état du compteur temporel CT dans le registre, ce compteur temporel est réinitialisé et un temporisateur associé au circuit logique 62 est enclenché pour mesurer un certain délai dont la valeur T_{C1} ou T_{D1} est sélectionnée en fonction du résultat de la comparaison de la valeur du compteur CT avec la valeur Tdiff. Dans le premier mode de réalisation, le dispositif de régulation comprend donc un dispositif de détection, agencé pour pouvoir détecter l'apparition successive alternativement de premiers lobes de tension et de deuxièmes lobes de tension, et un compteur temporel CT associé au circuit logique de commande 62 pour permettre à ce dernier de distinguer un premier intervalle de temps, séparant un premier lobe de tension d'un deuxième lobe de tension qui suit, et un deuxième intervalle de temps séparant un deuxième lobe de tension d'un premier lobe de tension qui suit, les premier et deuxième intervalles de temps étant différents du fait de l'agencement de l'ensemble électro-magnétique.

L'agencement de l'ensemble électromagnétique est prévu ici tel que la courbe du signal de tension induite Ui(t) présente deux lobes de tension LU₂ et LU₁, avec une même amplitude maximale (UM₂ = UM₁), qui interviennent dans une seconde demi-alternance et dans la première demi-alternance suivante, mais aucun lobe de tension de sensiblement même amplitude n'est engendré dans les deux demi-alternances suivantes. La courbe du signal de tension induite Ui(t) représentée à la Figure 10A découle de l'ensemble électromagnétique 27 décrit précédemment. Dans le premier mode de réalisation, la bobine 28 présente en son centre un décalage angulaire θ relativement au demi-axe de référence 48 (Fig. 2 ; position angulaire de l'aimant 22 lorsque le résonateur mécanique 6 est dans sa position de repos) de sorte à engendrer dans chaque période d'oscillation du résonateur mécanique, dans ladite plage de fonctionnement utile, seulement deux lobes de tension de même polarité et de sensiblement même amplitude maximale qui interviennent dans deux demi-alternances consécutives et qui forment respectivement un desdits deuxièmes lobes de tension et un desdits premiers lobes de tension. De préférence, le décalage angulaire θ est compris entre 30° et 120° en valeur absolue.

Lors de la comparaison susmentionnée entre la valeur du compteur temporel CT et la valeur de différentiation Tdiff, le temporisateur associé au circuit logique attend soit un délai T_{C1} lorsque la valeur du compteur temporel CT est supérieure à la valeur de différentiation Tdiff, soit un délai T_{D1} lorsque la valeur du compteur temporel CT est inférieure à la valeur de différentiation Tdiff. Dans le premier cas, la comparaison permet de savoir que l'impulsion détectée est une impulsion S2 générée par un deuxième lobe de tension LU₂ et le délai T_{C1} est choisi pour qu'il termine dans une première zone temporelle ZT1 suivant ce deuxième lobe de tension. Dans le second cas, la comparaison permet de savoir que l'impulsion détectée est une impulsion S1 générée par un premier lobe de tension LU₁ et le délai T_{D1} est choisi pour qu'il termine dans une deuxième zone temporelle ZT2 suivant ce premier lobe de tension. De manière générale, le dispositif de régulation comprend un temporisateur associé au circuit logique de commande pour permettre à ce dernier d'activer, le cas échéant, le dispositif de pompe de charge à un premier temps déterminé depuis l'apparition d'un deuxième lobe de tension, ce premier temps étant situé dans une première zone temporelle, ou à un deuxième temps déterminé depuis l'apparition d'un premier lobe de tension, ce deuxième temps étant situé dans une deuxième zone temporelle.

Dans le premier cas susmentionné, lorsque le délai Tci est atteint, on détermine si la valeur logique du bit d'état BE_{PC} est égale à '0' ou '1'. Si cette valeur logique est égale à '0', alors on détecte si le compteur CB, indiquant une dérive temporelle éventuelle de l'oscillateur mécanique, a une valeur supérieure à un nombre naturel donné N1 (nombre positif ou égal à zéro). Si tel est le cas, l'oscillateur mécanique présente une avance relativement à l'oscillateur auxiliaire. Pour corriger une telle avance, il est prévu selon l'invention de transférer une première charge électrique de la capacité d'alimentation dans la pompe de charge à la fin du délai T_{C1} susmentionné et donc dans la première zone temporelle ZT1 correspondante. La baisse de la tension d'alimentation U_{AL}(t) qui en résulte engendre, lors de l'apparition du premier lobe de tension suivant le transfert susmentionné, une impulsion de courant induit ayant une amplitude supérieure à celle de l'impulsion P1 qui interviendrait en l'absence d'activation de la pompe de charge. Cette augmentation du courant induit dans la bobine 28 signifie une plus grande énergie mécanique prise à l'oscillateur mécanique par le dispositif de freinage dans une première demi-alternance. Comme déjà exposé, un freinage dans une première demi-alternance engendre un déphasage temporel négatif dans l'oscillation du résonateur mécanique 6, et ainsi la durée de l'alternance en question est augmentée. Par le freinage plus intense opéré dans une première demi-alternance, on diminue momentanément la fréquence instantanée de l'oscillateur mécanique et il en résulte un certain retard dans la marche du mécanisme qu'il cadence, ce qui corrige au moins partiellement l'avance détectée par le dispositif de mesure. Si la valeur logique du bit d'état BE_{PC} est égale à '1', alors ceci indique qu'une deuxième charge électrique a été prélevée avant l'apparition du deuxième lobe de tension LU₂ ayant généré l'impulsion S2 en question (à savoir lors de l'apparition d'un premier lobe de tension LU₁ précédent, ce qui correspond au second cas traité ci-après). Cette deuxième charge électrique est alors substantiellement restituée à la capacité d'alimentation, de préférence dans la première zone temporelle ZT1 suivant le deuxième lobe de tension LU₂ considéré.

Dans le second cas susmentionné, lorsque le délai T_{D1} est atteint, on détermine si la valeur logique du bit d'état BE_{PC} est égale à '0' ou '1'. Si cette valeur logique est égale à '0', alors on détecte si le compteur BC a une valeur inférieure à un nombre négatif donné - N2, N2 étant un nombre naturel. Si tel est le cas, l'oscillateur mécanique présente un retard relativement à l'oscillateur auxiliaire (cas correspondant aux Figures 10A et 10B). Pour corriger un tel retard, il est prévu selon l'invention de transférer une deuxième charge électrique de la capacité d'alimentation dans la pompe de charge à la fin du délai T_{D1} susmentionné et donc dans la deuxième zone temporelle ZT2 correspondante. La baisse de la tension d'alimentation U_{AL}(t) qui en résulte (indiqué par la référence PC₂ à la Fig.10A) engendre, lors de l'apparition du deuxième lobe de tension suivant le transfert susmentionné, une impulsion de courant induit P2^{PC} ayant une amplitude supérieure à celle de l'impulsion P2 qui interviendrait en l'absence de régulation. Cette augmentation du courant induit dans la bobine 28 signifie une plus grande énergie mécanique prise à l'oscillateur mécanique par le dispositif de freinage dans une seconde demi-alternance DA2^{P}. Comme déjà exposé, un freinage dans une seconde demi-alternance engendre un déphasage temporel positif dans l'oscillation du résonateur mécanique, et ainsi la durée de l'alternance en question est diminuée. Par le freinage plus intense opéré dans une seconde demi-alternance, on augmente momentanément la fréquence instantanée de l'oscillateur mécanique et il en résulte une certaine avance dans la marche du mécanisme qu'il cadence, ce qui corrige au moins partiellement le retard détecté par le dispositif de mesure. Si la valeur logique du bit d'état BE_{PC} est égale à '1', alors ceci indique qu'une première charge électrique a été prélevée avant l'apparition du premier lobe de tension LU₁ ayant généré l'impulsion S1 en question (à savoir lors de l'apparition d'un deuxième lobe de tension LU₂ précédent, ce qui correspond premier cas traité précédemment). Cette première charge électrique est alors substantiellement restituée à la capacité d'alimentation, de préférence dans la seconde zone temporelle ZT2 suivant le premier lobe de tension LU₁ considéré.

Un prélèvement d'une charge électrique dans une première zone temporelle ZT1 à la fin du délai T_{C1} engendre donc une impulsion de courant induit d'amplitude supérieure dans une première demi-alternance correspondante, cette première demi-alternance ayant une durée supérieure à celles des secondes demi-alternances DA1⁰ et DA1¹ qui correspondent respectivement à une demi-alternance au cours de laquelle aucune impulsion de courant induit n'est engendrée et à une demi-alternance au cours de laquelle une impulsion de compensation P1 de la consommation électrique de la charge intervient. Dans le cas représenté aux Figures 10A et 10B, un prélèvement d'une charge électrique est intervenu dans une deuxième zone temporelle ZT2 à la fin du délai T_{D1}, indiqué par la référence PC₂ qui pointe une marche descendante dans la tension d'alimentation U_{AL}(t). Comme indiqué, il en résulte une impulsion de courant induit P2^{PC} d'amplitude supérieure dans la seconde demi-alternance DA2^{P} de l'alternance A1, cette seconde demi-alternance ayant une durée moindre que les secondes demi-alternances DA2⁰ et DA2¹ qui correspondent respectivement à une demi-alternance au cours de laquelle aucune impulsion de courant induit n'est engendrée et à une demi-alternance au cours de laquelle une impulsion de compensation P2 de la consommation électrique de la charge intervient.

Dans le second cas indiqué précédemment et suite au prélèvement d'une charge électrique ayant engendré l'impulsion de courant induit P2^{PC} dans la seconde demi-alternance DA2^{P}, le procédé de régulation, dans la séquence suivante à la Figure 9, détecte le flanc montant de l'impulsion S2 qui suit dans le signal 'Comp', laquelle a engendré l'impulsion de courant induit P2^{PC}. L'intervalle de temps mesuré par le compteur CT est alors ici supérieur à Tdiff. Le circuit logique de commande attend donc un délai T_{C1} et il constate que le bit d'état BE_{PC} a la valeur logique '1'. Le circuit logique actionne alors la pompe de charge pour qu'elle restitue à la fin du délai T_{C1} sensiblement la charge électrique qu'elle a momentanément stockée, à savoir dans la première zone temporelle ZT1 (cet évènement est indiqué par la référence RC₁ à la figure 10A, laquelle pointe une marche montante dans la tension d'alimentation). Le fait de recharger la capacité d'alimentation C_{AL} avec la charge électrique stockée dans la pompe de charge a pour conséquence une élévation de la tension d'alimentation U_{AL}(t). Dans la variante représentée, cette élévation de tension dans une première zone temporelle ZT1 a pour conséquence que la tension maximale UM₁ du premier lobe de tension LU₁ suivant la restitution de la charge électrique est sensiblement égale à la tension d'alimentation au temps t₁ de l'apparition de cette tension maximale, de sorte qu'aucune impulsion de courant induit n'est engendrée alors que, en l'absence d'activation de la pompe de charge, une impulsion nominale P1 aurait été engendrée.

Ainsi, dans la première demi-alternance DA1^{R} de l'alternance A2, il y a une diminution de l'énergie de freinage relativement à l'énergie de freinage nominale de sorte que la durée de cette première demi-alternance est inférieure à la durée DA1¹ qu'aurait eu cette demi-alternance avec une impulsion nominale P1. En effet, la durée DA1^{R} est ici égale à la durée DA1⁰ qui correspond à une première demi-alternance sans freinage du résonateur mécanique par le dispositif de freinage. Cet événement a donc un effet cumulatif avec celui ayant conduit à engendrer l'impulsion P2^{PC}, car tous deux engendrent un déphasage temporel positif dans l'oscillation du résonateur mécanique et participent donc à rattraper le retard détecté dans la marche du mécanisme considéré. Il en va de manière analogue en cas de détection d'une certaine avance dans la marche du mécanisme. Dans ce cas, le prélèvement d'une charge électrique de la capacité d'alimentation par la pompe de charge à la fin du délai Tci, dans une première zone temporelle ZT1 suivant un deuxième lobe de tension LU₂, et la restitution substantielle de cette charge électrique à la capacité d'alimentation dans la deuxième zone temporelle ZT2, suivant le premier lobe de tension LU₁ intervenant en premier lieu après l'apparition du deuxième lobe de tension susmentionné, ont un effet cumulatif et engendrent tous deux un déphasage temporel négatif dans l'oscillation du résonateur mécanique et participent donc à retarder la marche du mécanisme considéré pour compenser l'avance détectée.

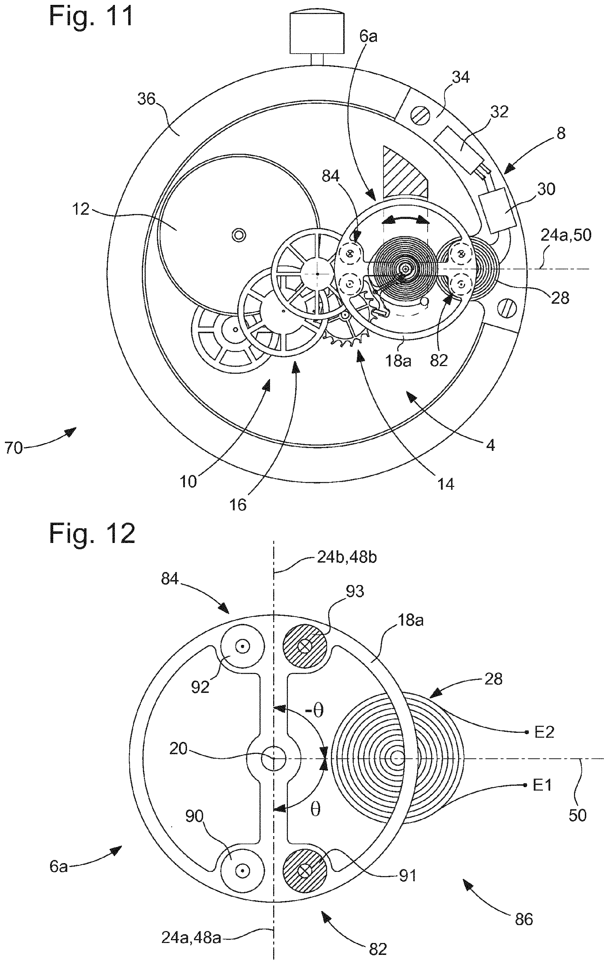

A l'aide des Figures 11 à 15 et 16A à 16C, on décrira par la suite un deuxième mode de réalisation d'une pièce d'horlogerie 70 selon l'invention. Le mouvement horloger de cette pièce d'horlogerie se différencie de celui représenté en Fig.1 essentiellement par la configuration du balancier 18a, formant le résonateur mécanique 6a, qui porte ici deux paires d'aimants bipolaires 82 et 84. Les enseignements déjà donnés qui interviennent à nouveau ici ne seront plus exposés en détails. Ce qui rend remarquable ce deuxième mode de réalisation relativement au premier mode de réalisation réside en particulier dans le choix de l'ensemble électromagnétique 86 formant le transducteur électromagnétique et du dispositif de régulation 72. Cet ensemble électromagnétique comprend deux paires 82 et 84 d'aimants bipolaires 90 et 91, respectivement 92 et 93, qui sont montés sur balancier 18a du résonateur mécanique 6a et qui ont des axes d'aimantation respectifs qui sont parallèles à l'axe de rotation 20 du balancier, et une bobine 28 qui est solidaire du support du résonateur mécanique.

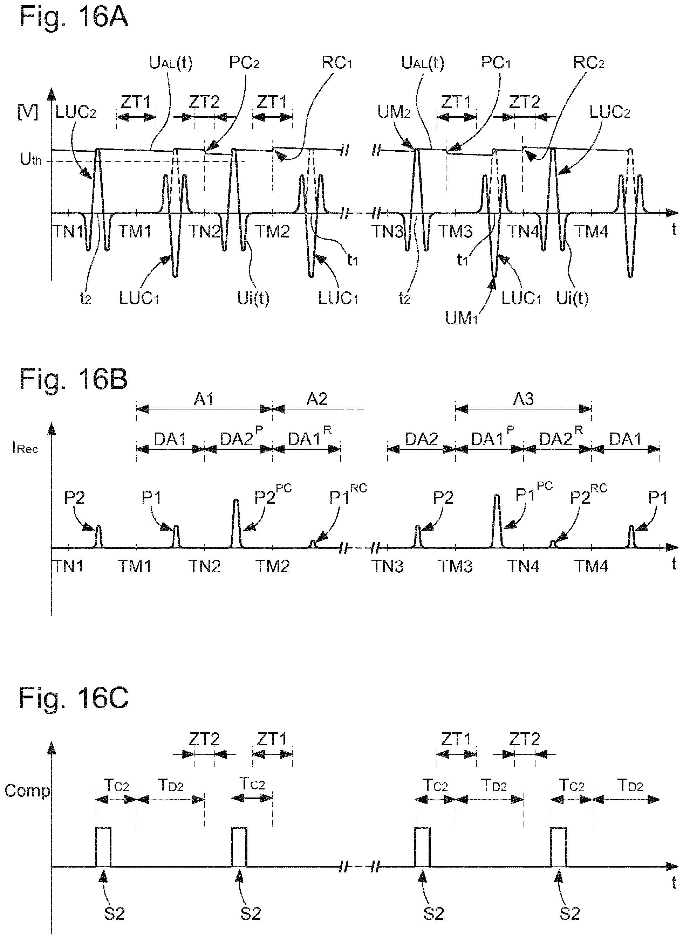

Les deux aimants bipolaires de chacune des deux paires 82 et 84 ont des polarités respectives opposées et sont agencés de manière que leurs flux magnétiques respectifs traversent, dans chaque alternance, la bobine 28 avec un décalage temporel mais au moins en partie une simultanéité du flux magnétique entrant et du flux magnétique sortant. Ainsi, chaque paire d'aimants et la bobine sont agencées de manière qu'une impulsion de tension induite générée entre les deux extrémités E1, E2 de la bobine, au passage de cette paire d'aimants en regard de cette bobine, présente un lobe central d'amplitude maximale résultant d'un couplage simultané des deux aimants avec la bobine. Chaque paire d'aimants bipolaires définit un demi-axe médian 24a, 24b partant de l'axe de rotation 20 du balancier et passant par le milieu de la paire d'aimants bipolaires considérée. Chaque demi-axe médian définit un demi-axe de référence respectif 48a, 48b lorsque le résonateur 6a est au repos et ainsi dans sa position neutre, comme représenté à la Figure 12. La bobine 28 présente en son centre un premier décalage angulaire θ relativement au premier demi-axe de référence 48a et un second décalage angulaire - θ (même valeur absolue que le premier décalage angulaire, mais signe mathématique opposé) relativement au second demi-axe de référence 48a, de sorte à engendrer dans chaque alternance du résonateur mécanique, dans une plage de fonctionnement utile, deux lobes de tension centraux LUC₁ et LUC₂ ayant des polarités opposées (négative et positive) et sensiblement une même amplitude UM₁, UM₂ en valeur absolue et formant respectivement un premier lobe de tension et un deuxième lobe de tension (Fig.16A).

Comme dans le premier mode de réalisation, les premiers et deuxièmes lobes de tension LUC₁ et LUC₂ interviennent respectivement dans des premières demi-alternances et des secondes demi-alternances. Le décalage angulaire θ est avantageusement compris entre 30° et 120°. De préférence, pour équilibrer le balancier 18a, les premier et second déphasages angulaires ont une valeur absolue de 90° (variante représentée aux Figures 11 et 12). Les deux paires d'aimants 82 et 84 sont agencées de manière que les polarités des aimants d'une paire soient symétriques aux polarités des aimants de l'autre paire relativement à un plan passant par le centre de la bobine et comprenant l'axe de rotation 20 (ce plan comprenant le demi-axe 50 passant par le centre de la bobine et interceptant perpendiculairement l'axe de rotation 20). On notera que la variante du deuxième mode de réalisation décrite en référence aux figures est une variante perfectionnée. Dans une autre variante qui ne sera pas décrite plus en détails par la suite, il est prévu une seule paire d'aimants présentant un décalage angulaire compris entre 30° et 120° (en valeur absolue). Cette autre variante comprend un circuit de régulation sans la bascule 66. Le procédé de régulation reste similaire et l'homme du métier saura l'adapter à cette variante particulière.

Le signal de tension induite Ui(t), représenté à la Figure 16A, présente alternativement des lobes de tension LUC₁ ayant une tension négative et des lobes de tension LUC₂ ayant une tension positive. Le convertisseur électrique 76 comprend un redresseur double alternance 78 formé par un pont de quatre diodes bien connu de l'homme du métier. Ainsi, en sortie du redresseur 78, les premiers lobes de tension sont redressés, ce qui est représenté à la Fig.16A par les lobes en traits interrompus. Comme dans le premier mode de réalisation, en l'absence d'activation de la pompe de charge 60a, les premiers et deuxièmes lobes de tension LUC₁ et LUC₂ rechargent alternativement la capacité d'alimentation C_{AL} qui alimente notamment le circuit de régulation 74. Etant donné qu'il y a deux paires d'aimants, chaque alternance présente un premier lobe de tension dans une première demi-alternance et un deuxième lobe de tension dans une seconde demi-alternance. Comme le signal 'Comp' présente deux impulsions par période d'oscillation, il est prévu une bascule 66 en amont du compteur bidirectionnel CB de manière à inhiber une impulsion sur deux dans le signal fourni à ce compteur. Une caractéristique particulière de ce deuxième mode de réalisation réside dans les polarités opposées des premiers et deuxièmes lobes de tension. La variante représentée aux Figures 16A et 16C prévoit une tension de seuil Uth positive alors que les premiers lobes de tensions sont négatifs. On comprendra aisément qu'une simple inversion des extrémités E1 et E2 de la bobine 28 renverse la situation, ce qui engendrerait alors des premiers lobes de tension positifs et des deuxièmes lobes de tension négatifs. La tension de seuil peut être choisie positive ou négative. Ces choix déterminent les instants auxquels interviennent les impulsions S2 ou S1 (voir Fig.10C) dans le signal 'Comp' fourni par le comparateur 64. Ainsi, le dispositif de régulation comprend un dispositif de détection qui est agencé pour pouvoir détecter l'apparition successive de premiers lobes de tension ou de deuxièmes lobes de tension. A noter qu'on peut aussi prévoir de détecter alternativement ces premiers et deuxièmes lobes de tension à l'aide de deux comparateurs ayant en entrée respectivement un seuil de tension positif et un seuil de tension négatif. L'homme du métier saura adapter le procédé de régulation implémenté dans le circuit logique de commande 62a en conséquence, en particulier pour la détermination des délais T_{C2} et T_{D2}.

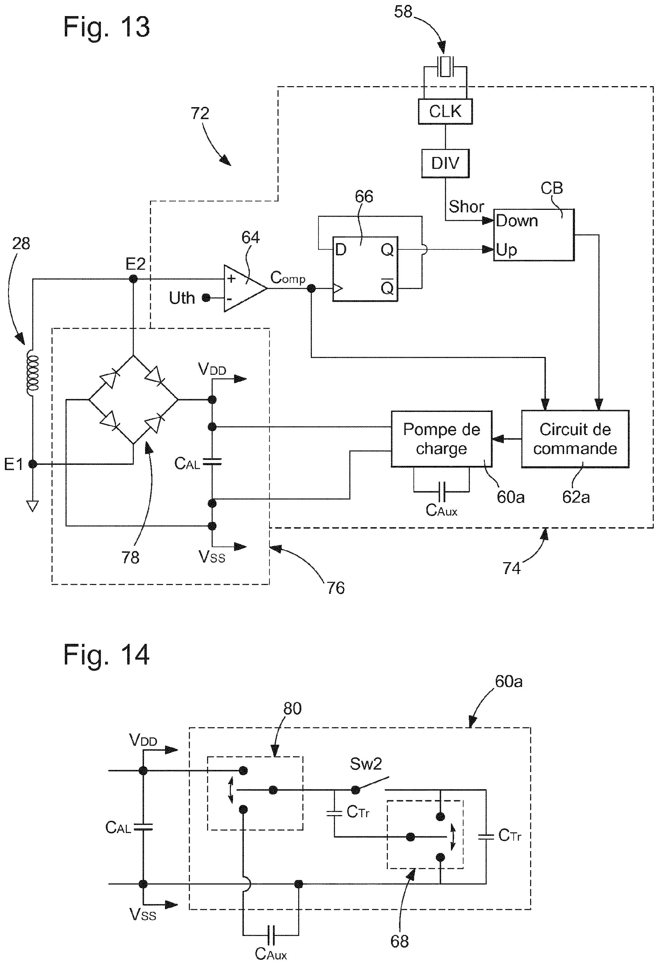

Le dispositif de pompe de charge du circuit de régulation 74 (Figure 13) est formé d'une pompe de charge 60a et d'une capacité auxiliaire C_{Aux} de stockage temporaire d'énergie électrique. La pompe de charge 60a comprend au moins deux capacités de transfert C_{Tr}, un interrupteur Sw2 et deux commutateurs 68 et 80 pouvant être commandés par le circuit logique de commande 62a de manière à soit agencer les deux capacités de transfert en parallèle, soit agencer ces deux capacités de transfert en série. Ce dispositif de pompe de charge se distingue de celui du premier mode de réalisation par le fait que le circuit logique de commande est agencé pour qu'au moins la majeure partie d'une charge électrique prélevée de la capacité d'alimentation C_{AL} puisse être transférée par la pompe de charge dans la capacité auxiliaire C_{Aux} dans laquelle elle est conservée temporairement jusqu'à la restitution au moins partielle de cette charge électrique à la capacité d'alimentation via la pompe de charge. Cet agencement particulier permet au circuit logique de commande de prélever une charge électrique de la capacité d'alimentation en plusieurs cycles de transfert d'une moindre charge électrique entre la capacité d'alimentation et la capacité auxiliaire par la pompe de charge. Cette pluralité de cycles de transfert est effectuée dans une première zone temporelle ZT1 ou une deuxième zone temporelle ZT2. De même, la restitution au moins partielle de ladite charge électrique à la capacité d'alimentation peut être effectuée en plusieurs cycles de transfert d'une moindre charge électrique entre la capacité auxiliaire et la capacité d'alimentation par la pompe de charge. Un tel agencement permet donc de prélever selon l'invention une certaine charge électrique de la capacité d'alimentation qui soit largement supérieure à celle pouvant être stockée momentanément dans les deux capacités de transfert. Ainsi, ces capacités de transfert peuvent avoir une relativement petite valeur et la capacité auxiliaire avoir une valeur largement supérieure et appropriée aux charges électriques qu'il est prévu de prélever momentanément pour réguler l'oscillateur mécanique.

Comme déjà indiqué, le deuxième mode de réalisation se distingue du premier en particulier par le fait que l'ensemble électromagnétique 86 est agencé de sorte que les premiers lobes de tension et les deuxièmes lobes de tension ont des polarités opposées, de sorte qu'un comparateur 64 peut détecter directement soit les premiers lobes de tension, soit les deuxièmes lobes de tension (cas représenté à la Fig. 20A). Il n'est donc ici pas nécessaire de devoir différencier dans les impulsions fournies par le comparateur celles qui correspondent aux premiers lobes de celles qui correspondent aux deuxièmes lobes, raison pour laquelle il n'y a pas de compteur temporel CT, mais seulement un temporisateur associé au circuit logique de commande, lequel peut être intégré à l'intérieur de ce circuit logique, pour mesurer deux délais T_{C2} et T_{D2}. A la Figure 16C, on observe que le signal 'Comp' présente seulement des impulsions S2 qui correspondent chacune à l'apparition d'un deuxième lobe de tension LUC₂. On ne décrira pas à nouveau en détails le principe de fonctionnement du système de régulation selon l'invention, mais essentiellement les éléments distinctifs.

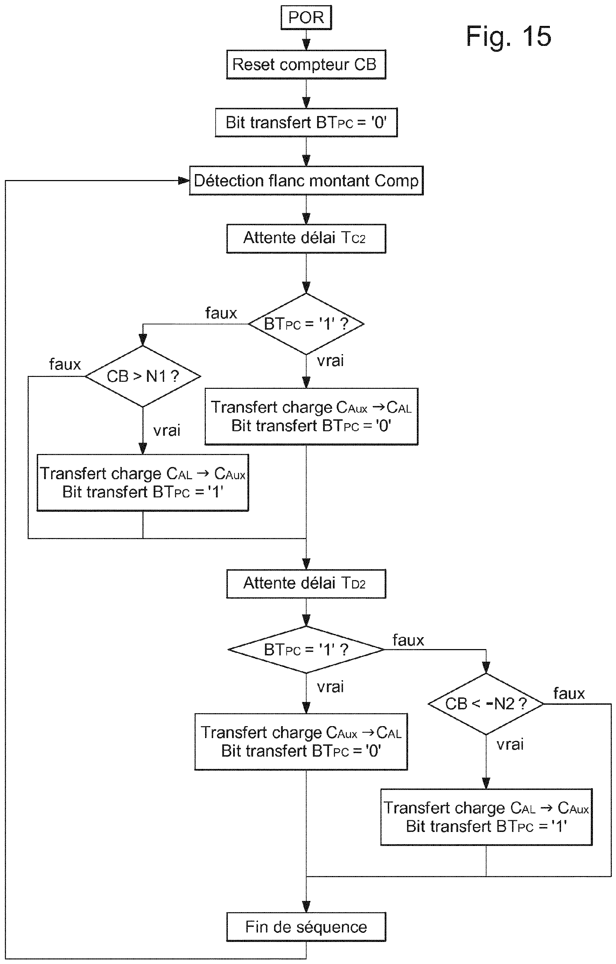

La Figure 15 est un organigramme du procédé de régulation implémenté dans le circuit logique de commande 62a. Lors de la mise en fonction du dispositif de régulation 72, le circuit de régulation 74 est initialisé à 'POR', en particulier le compteur bidirectionnel CB. Le circuit logique a un bit mémoire BT_{PC} (nommé par la suite bit transfert) qui enregistre les transferts de charges électriques entre la capacité d'alimentation C_{AL} et la capacité auxiliaire C_{Aux} et inversement. Lorsqu'un prélèvement d'une charge électrique dans une première ou deuxième zone temporelle est effectué, le bit transfert est mis à '1'. Ensuite, lors de la restitution au moins partielle et généralement en majeure partie de la charge électrique à la capacité d'alimentation respectivement dans une deuxième ou première zone temporelle, de préférence la suivante, le bit transfert est mis à '0'. Ce bit transfert est mis initialement à la valeur logique '0' puisqu'aucun prélèvement n'a encore eu lieu.

Le circuit logique attend ensuite l'apparition d'une impulsion S2, à savoir notamment son flanc montant. La détection de ce flanc montant déclenche le temporisateur qui mesure un premier intervalle de temps T_{C2} dont la durée est choisie pour que sa fin intervienne dans une première zone temporelle ZT1 située temporellement entre un deuxième lobe de tension LUC₂ et un premier lobe de tension LUC₁, notamment entre l'instant t₂ et l'instant t₁ où ces deux lobes présentent respectivement leurs valeurs maximales UM₂ et UM₁ (Fig.16A). A la fin du délai T_{C2}, si le bit transfert BT_{PC} est à '0', le circuit logique détecte si la valeur du compteur bidirectionnel CB est supérieure à un nombre naturel N1. Si tel est le cas, il commande alors le transfert d'une première charge électrique de la capacité d'alimentation dans la capacité auxiliaire du dispositif de pompe de charge. Un tel événement engendre une marche descendante PC₁ dans la tension d'alimentation U_{AL}(t) et l'impulsion de courant induit suivante P1^{PC} qui intervient dans une première demi-alternance présente alors une amplitude supérieure à celle d'une impulsion P1 en l'absence de prélèvement antérieur d'une charge électrique (voir partie droite des Fig.16A à Fig.16C). Si le compteur CB a une valeur égale ou inférieure au nombre naturel N1, alors le circuit logique attend qu'un deuxième délai T_{D2} suivant directement le premier délai arrive à sa fin (Fig.16C). Ce deuxième délai T_{D2} est choisi de sorte que sa fin intervienne dans une deuxième zone temporelle ZT2 située entre un premier lobe de tension LUC₁ et un deuxième lobe de tension LUC₂, en particulier dans la deuxième zone temporelle adjacente à la première zone temporelle susmentionnée. Si à la fin du premier délai T_{C2} le bit transfert BT_{PC} est à '1', indiquant qu'un prélèvement a été effectué précédemment, le circuit logique commande la pompe de charge 60a pour qu'elle restitue au moins partiellement une deuxième charge électrique, de préférence au moins la majeure partie de la deuxième charge électrique prélevée, à la capacité d'alimentation dans la première zone temporelle considérée. Un tel événement engendre une marche montante RC₁ dans la tension d'alimentation U_{AL}(t) et l'impulsion de courant induit suivante P1^{RC} qui intervient dans une première demi-alternance présente alors une amplitude inférieure à celle d'une impulsion P1 en l'absence de prélèvement antérieur d'une charge électrique et de restitution de celle-ci (voir partie gauche des Fig.16A à Fig.16C).

Dès la fin d'un premier intervalle de temps T_{C2}, le temporisateur commence à mesurer un deuxième intervalle de temps T_{D2}. A la fin du délai T_{D2}, si le bit transfert BT_{PC} est à '0', le circuit logique détecte si la valeur du compteur bidirectionnel CB est inférieure à un nombre - N2, N2 étant un nombre naturel. Si tel est le cas, il commande alors le transfert, durant la deuxième zone temporelle ZT2 en question, d'une deuxième charge électrique de la capacité d'alimentation dans la capacité auxiliaire du dispositif de pompe de charge. Un tel événement engendre une marche descendante PC₂ dans la tension d'alimentation U_{AL}(t) et l'impulsion de courant induit suivante P2^{PC} qui intervient dans une seconde demi-alternance présente alors une amplitude supérieure à celle d'une impulsion P2 en l'absence de prélèvement antérieur d'une charge électrique (voir partie gauche des Fig.16A et Fig.16B). Si le compteur CB a une valeur égale ou supérieure au nombre - N2, alors le circuit logique met fin à la séquence et attend la détection d'une nouvelle impulsion S2 pour lancer la séquence suivante. Si à la fin du deuxième délai T_{D2} le bit transfert BT_{PC} est à '1', indiquant qu'un prélèvement a été effectué précédemment, le circuit logique commande la pompe de charge 60a pour qu'elle restitue au moins en partie une première charge électrique, de préférence au moins la majeure partie de la première charge électrique prélevée, à la capacité d'alimentation dans la deuxième zone temporelle considérée. Un tel événement engendre une marche montante RC₂ dans la tension d'alimentation U_{AL}(t) et l'impulsion de courant induit suivante P2^{RC} qui intervient dans une seconde demi-alternance présente alors une amplitude inférieure à celle d'une impulsion P2 en l'absence de prélèvement antérieur d'une charge électrique et de restitution de celle-ci (voir partie droite des Fig.16A et Fig.16B). On notera que les impulsions P1^{RC} et P2^{RC} peuvent ne pas apparaître, ce qui correspond alors à une absence de courant induit dans la bobine 28. Après avoir effectué la restitution au moins partielle de ladite première charge électrique, le circuit logique met fin à la séquence en cours. On remarquera que la restitution au moins partielle d'une charge électrique prélevée est assurée dans une phase de fonctionnement normal du dispositif de régulation, laquelle peut suivre une phase initiale de régulation au cours de laquelle la capacité auxiliaire C_{Aux} est premièrement chargée jusqu'à un certain niveau de tension. Ainsi, comme dans le premier mode de réalisation, un retard ou une avance constaté(e) dans la marche du mécanisme considéré est corrigé(e) premièrement par le prélèvement sélectif d'une charge électrique et deuxièmement par la restitution sélective d'au moins une partie de cette charge électrique.

Finalement, dans une variante, le circuit logique de commande est agencé de manière à pouvoir effectuer, lorsque la dérive temporelle mesurée correspond à au moins une certaine avance, une pluralité de prélèvements de charges électriques respectivement dans une pluralité de premières zones temporelles. De même, lorsque la dérive temporelle mesurée correspond à au moins un certain retard, une pluralité de prélèvements de charges électriques respectivement dans une pluralité de deuxièmes zones temporelles sont réalisés. Chaque prélèvement d'une charge électrique est suivi d'une restitution au moins partielle de celle-ci, comme exposé. En d'autres termes, après une détection d'une certaine dérive temporelle, dont la valeur est par exemple supérieure à un deuxième niveau de détection indiquant une dérive temporelle relativement importante, le circuit logique de commande effectue automatiquement une pluralité de cycles de prélèvement - restitution d'une charge électrique selon l'invention, notamment dans une pluralité de périodes d'oscillation qui peuvent être consécutives ou non.

## Revendications

1. Pièce d'horlogerie (2 ; 70), comprenant :
- un mécanisme,
- un résonateur mécanique (6 ; 6a) susceptible d'osciller autour d'une position neutre correspondant à son état d'énergie potentielle mécanique minimale, chaque oscillation du résonateur mécanique définissant une période d'oscillation et présentant deux alternances successives chacune entre deux positions extrêmes qui définissent l'amplitude d'oscillation du résonateur mécanique, chaque alternance présentant un passage du résonateur mécanique par sa position neutre à un instant médian et étant constituée d'une première demi-alternance entre un instant initial de cette alternance et son instant médian et d'une seconde demi-alternance entre cet instant médian et un instant final de cette alternance,
- un dispositif d'entretien (14) du résonateur mécanique formant avec ce résonateur mécanique un oscillateur mécanique qui définit la cadence de la marche dudit mécanisme,
- un transducteur électromécanique agencé pour pouvoir convertir de la puissance mécanique de l'oscillateur mécanique en puissance électrique lorsque le résonateur mécanique oscille avec une amplitude comprise dans une plage de fonctionnement utile, ce transducteur électromagnétique étant formé par un ensemble électromagnétique (27 ; 86) comprenant au moins une bobine (28), montée sur un élément parmi l'ensemble mécanique constitué du résonateur mécanique et de son support, et au moins un aimant (22 ; 90,91,92,93) monté sur l'autre élément de cet ensemble mécanique, l'ensemble électromagnétique étant agencé de manière à pouvoir fournir un signal de tension induite (Ui(t)) entre les deux bornes de sortie (E1, E2) du transducteur électromécanique au moins lorsque le résonateur mécanique oscille avec une amplitude comprise dans la plage de fonctionnement utile,
- un convertisseur électrique (56 ; 76) relié aux deux bornes de sortie du transducteur électromécanique de manière à pouvoir recevoir de ce transducteur électromécanique un courant électrique induit (I_{REC}), ce convertisseur électrique comprenant une capacité d'alimentation (C_{AL}) agencée pour accumuler de l'énergie électrique fournie par le transducteur électromécanique, ce transducteur électromécanique et le convertisseur électrique formant ensemble un dispositif de freinage du résonateur mécanique qui est agencé de manière qu'une quantité d'énergie électrique fournie à la capacité d'alimentation lors d'une recharge est d'autant plus grande que le niveau de tension de cette capacité d'alimentation est bas,
- une charge (54; 74) connectée ou susceptible d'être régulièrement connectée au convertisseur électrique pour être alimentée par la capacité d'alimentation,
- un dispositif de régulation (52 ; 72) de la fréquence de l'oscillateur mécanique, ce dispositif de régulation comprenant un oscillateur auxiliaire (58) et un dispositif de mesure (64, CB) agencé pour pouvoir détecter une dérive temporelle éventuelle de l'oscillateur mécanique relativement à l'oscillateur auxiliaire, le dispositif de régulation étant agencé pour pouvoir déterminer si la dérive temporelle mesurée correspond à au moins une certaine avance ;
la pièce d'horlogerie étant **caractérisée en ce que** le dispositif de freinage est agencé de manière que, dans chaque période d'oscillation du résonateur mécanique lorsque l'amplitude d'oscillation de ce résonateur mécanique est dans la plage de fonctionnement utile, le signal de tension induite présente un premier lobe de tension (LU₁, LUC₁) intervenant au moins en majeure partie dans une première demi-alternance ou dans chacune des deux premières demi-alternances et un deuxième lobe de tension (LU₂, LUC₂) intervenant au moins en majeure partie dans une seconde demi-alternance ou dans chacune des deux secondes demi-alternances ; **en ce que** le dispositif de freinage est agencé de manière que, au moins lorsqu'aucune dérive temporelle n'est détectée par le dispositif de mesure et au moins lorsque ladite charge consomme en continu ou de manière quasi continue de l'énergie électrique accumulée dans la capacité d'alimentation lors d'un mode de fonctionnement normal de la pièce d'horlogerie, chaque premier lobe de tension et chaque deuxième lobe de tension est susceptible d'engendrer une impulsion de courant induit (P1, P2) qui recharge la capacité d'alimentation ; **en ce que** chaque premier lobe de tension présente, en valeur absolue, une première valeur maximale (UM₁) à un premier instant (t₁) de la première demi-alternance correspondante et chaque deuxième lobe de tension présente, en valeur absolue, une deuxième valeur maximale (UM₂) à un deuxième instant (t₂) de la seconde demi-alternance correspondante, les premiers et deuxièmes lobes de tension définissant, d'une part, des premières zones temporelles (ZT1) situées chacune avant ledit premier instant d'un premier lobe de tension différent et après le deuxième instant du deuxième lobe de tension précédant ce premier lobe de tension et, d'autre part, des deuxièmes zones temporelles (ZT2) situées chacune avant ledit deuxième instant d'un deuxième lobe de tension différent et après le premier instant du premier lobe tension précédant ce deuxième lobe de tension ; **en ce que** le dispositif de régulation comprend un dispositif de pompe de charge (60; 60a, C_{Aux}) agencé pour pouvoir prélever sur commande une charge électrique de la capacité d'alimentation (C_{AL}), de manière à diminuer momentanément le niveau de tension de cette capacité d'alimentation ; et **en ce que** le dispositif de régulation comprend en outre un circuit logique de commande (62; 62a) qui reçoit en entrée un signal de mesure fourni par le dispositif de mesure et qui est agencé pour activer le dispositif de pompe de charge de manière qu'il effectue, lorsque la dérive temporelle mesurée correspond à ladite au moins une certaine avance, un prélèvement d'une première charge électrique de la capacité d'alimentation dans une première zone temporelle parmi lesdites premières zones temporelles, le circuit logique de commande étant en outre agencé pour activer le dispositif de pompe de charge de manière qu'il restitue, dans une phase de fonctionnement normal du dispositif de pompe de charge, au moins partiellement la première charge électrique à la capacité d'alimentation dans une deuxième zone temporelle parmi lesdites deuxièmes zones temporelles.

2. Pièce d'horlogerie selon la revendication 1, **caractérisée en ce que** ladite deuxième zone temporelle (ZT2), au cours de laquelle intervient la restitution au moins partielle de ladite première charge électrique à la capacité d'alimentation, est celle qui intervient en premier lieu après la première zone temporelle (ZT1) au cours de laquelle intervient ledit prélèvement de cette première charge électrique.

3. Pièce d'horlogerie selon la revendication 1 ou 2, **caractérisée en ce que** le dispositif de régulation (52 ; 72) est également agencé pour pouvoir déterminer si la dérive temporelle mesurée correspond à au moins un certain retard ; et **en ce que** ledit circuit logique de commande (62; 62a) est agencé pour activer le dispositif de pompe de charge de manière qu'il effectue, lorsque la dérive temporelle mesurée correspond audit au moins un certain retard, un prélèvement d'une deuxième charge électrique de la capacité d'alimentation (C_{AL}) dans une deuxième zone temporelle parmi lesdites deuxièmes zones temporelles (ZT2), le circuit logique de commande étant en outre agencé pour activer le dispositif de pompe de charge de manière qu'il restitue, dans une phase de fonctionnement normal du dispositif de régulation, au moins partiellement cette deuxième charge électrique à la capacité d'alimentation dans une première zone temporelle parmi lesdites premières zones temporelles (ZT1).

4. Pièce d'horlogerie selon la revendication 3, **caractérisée en ce que** ladite première zone temporelle (ZT1), au cours de laquelle intervient la restitution au moins partielle de ladite deuxième charge électrique à la capacité d'alimentation, est celle qui intervient en premier lieu après la deuxième zone temporelle (ZT2) au cours de laquelle intervient ledit prélèvement de cette deuxième charge électrique.

5. Pièce d'horlogerie selon la revendication 1 ou 2, **caractérisée en ce que** le dispositif de pompe de charge est constitué d'une pompe de charge (60) comprenant au moins deux capacités de stockage temporaire (C_{St}) et des interrupteurs et/ou commutateurs pouvant être commandés par le circuit logique de commande (62) de manière à soit agencer les au moins deux capacités de stockage temporaire en parallèle, soit agencer ces au moins deux capacités de stockage temporaire en série ; et **en ce que** ladite première charge électrique prélevée de la capacité d'alimentation est conservée temporairement dans les au moins deux capacités de stockage temporaire jusqu'à ladite restitution au moins partielle de cette première charge électrique à la capacité d'alimentation, la charge électrique effectivement restituée correspondant à la majeure partie de ladite première charge électrique.

6. Pièce d'horlogerie selon la revendication 3 ou 4, **caractérisée en ce que** le dispositif de pompe de charge est formé d'une pompe de charge (60) comprenant au moins deux capacités de stockage temporaire (C_{St}) et des interrupteurs et/ou commutateurs pouvant être commandés par le circuit logique de commande (62) de manière à soit agencer les au moins deux capacités de stockage temporaire en parallèle, soit agencer ces au moins deux capacités de stockage temporaire en série ; et **en ce que** ladite première charge électrique et ladite deuxième charge électrique prélevées de la capacité d'alimentation sont chacune conservées temporairement dans les au moins deux capacités de stockage temporaire jusqu'à ladite restitution au moins partielle de cette première charge électrique, respectivement de cette deuxième charge électrique à la capacité d'alimentation, la charge électrique effectivement restituée correspondant à la majeure partie de ladite première charge électrique, respectivement de ladite deuxième charge électrique.

7. Pièce d'horlogerie selon la revendication 1 ou 2, **caractérisée en ce que** le dispositif de pompe de charge est formé d'une pompe de charge (60a) et d'une capacité auxiliaire (C_{Aux}) de stockage temporaire d'énergie électrique, la pompe de charge comprenant au moins deux capacités de transfert (C_{Tr}) et des interrupteurs et/ou commutateurs pouvant être commandés par le circuit logique de commande (62a) de manière à soit agencer les au moins deux capacités de transfert en parallèle, soit agencer ces au moins deux capacités de transfert en série ; et **en ce que** le circuit logique de commande et le dispositif de pompe de charge sont agencés pour qu'au moins la majeure partie de ladite première charge électrique prélevée de la capacité d'alimentation soit transférée via la pompe de charge dans la capacité auxiliaire dans laquelle elle est conservée temporairement jusqu'à ladite restitution au moins partielle de cette première charge électrique à la capacité d'alimentation via la pompe de charge.

8. Pièce d'horlogerie selon la revendication 7, **caractérisée en ce que** le circuit logique de commande (62a) et la capacité auxiliaire (C_{Aux}) sont agencés de manière que ledit prélèvement de ladite première charge électrique de la capacité d'alimentation est effectué en plusieurs cycles de transfert d'une moindre charge électrique entre la capacité d'alimentation et la capacité auxiliaire par la pompe de charge.

9. Pièce d'horlogerie selon la revendication 8, **caractérisée en ce que** le circuit logique de commande (62a) et la capacité auxiliaire (C_{Aux}) sont agencés de manière que ladite restitution au moins partielle de ladite première charge électrique à la capacité d'alimentation est effectué en plusieurs cycles de transfert d'une moindre charge électrique entre la capacité auxiliaire et la capacité d'alimentation par la pompe de charge.

10. Pièce d'horlogerie selon la revendication 3 ou 4, **caractérisée en ce que** le dispositif de pompe de charge est formé d'une pompe de charge (60a) et d'une capacité auxiliaire (C_{Aux}) de stockage temporaire d'énergie électrique, la pompe de charge comprenant au moins deux capacités de transfert (C_{Tr}) et des interrupteurs et/ou commutateurs pouvant être commandés par le circuit logique de commande (62a) de manière à soit agencer les au moins deux capacités de transfert en parallèle, soit agencer ces au moins deux capacités de transfert en série ; et **en ce que** le circuit logique de commande est agencé pour qu'au moins la majeure partie de ladite première charge électrique et la majeure partie de ladite deuxième charge électrique prélevées de la capacité d'alimentation puissent chacune être transférées via la pompe de charge dans la capacité auxiliaire dans laquelle elles sont chacune conservées temporairement jusqu'à ladite restitution au moins partielle de cette première charge électrique, respectivement de cette deuxième charge électrique à la capacité d'alimentation via la pompe de charge.

11. Pièce d'horlogerie selon la revendication 10, **caractérisée en ce que** le circuit logique de commande (62a) et la capacité auxiliaire (C_{Aux}) sont agencés de manière que les prélèvements de ladite première charge électrique et de ladite deuxième charge électrique de la capacité d'alimentation sont chacun effectués en plusieurs cycles de transfert d'une moindre charge électrique entre la capacité d'alimentation et la capacité auxiliaire par la pompe de charge.

12. Pièce d'horlogerie selon la revendication 11, **caractérisée en ce que** le circuit logique de commande (62a) et la capacité auxiliaire (C_{Aux}) sont agencés de manière que les restitutions au moins partielles de ladite première charge électrique et de ladite deuxième charge électrique à la capacité d'alimentation sont chacune effectuées en plusieurs cycles de transfert d'une moindre charge électrique entre la capacité auxiliaire et la capacité d'alimentation par la pompe de charge.

13. Pièce d'horlogerie selon une quelconque des revendications précédentes, **caractérisée en ce que** le circuit logique de commande (62, 62a) est agencé de manière à pouvoir effectuer, lorsque la dérive temporelle mesurée correspond à ladite au moins une certaine avance ou à au moins une avance donnée supérieure à cette dernière, une pluralité de prélèvements de premières charges électriques respectivement au cours d'une pluralité de premières zones temporelles.

14. Pièce d'horlogerie selon une quelconque des revendications 3, 4, 6, 10, 11 et 12, **caractérisée en ce que** le circuit logique de commande (62, 62a) est agencé de manière à pouvoir effectuer, lorsque la dérive temporelle mesurée correspond audit au moins un certain retard ou à au moins un retard supérieur à ce dernier, une pluralité de prélèvements de deuxièmes charges électriques respectivement au cours d'une pluralité de deuxièmes zones temporelles.

15. Pièce d'horlogerie selon une quelconque des revendications précédentes, **caractérisée en ce que** ladite charge est formée notamment par le dispositif de régulation (54; 74).

16. Pièce d'horlogerie selon une quelconque des revendications précédentes, **caractérisée en ce que** l'ensemble électromagnétique (27) comprend un aimant bipolaire (22), monté sur un balancier (18) du résonateur mécanique (6) et ayant un axe d'aimantation dans un plan géométrique comprenant l'axe de rotation du balancier, et une bobine (28) qui est solidaire du support du résonateur mécanique et agencée de manière à être traversée par le flux magnétique de l'aimant bipolaire, un demi-axe médian (24) partant de l'axe de rotation (20) du balancier et passant par ledit axe d'aimantation axial définissant un demi-axe de référence (48) lorsque le résonateur est au repos et ainsi dans sa position neutre ; et **en ce que** ladite bobine présente en son centre un décalage angulaire (θ) relativement au demi-axe de référence et ledit aimant bipolaire est agencé sur le balancier de sorte que le seul couplage entre cet aimant bipolaire et la bobine puisse engendrer dans chaque période d'oscillation du résonateur mécanique, dans ladite plage de fonctionnement utile, deux lobes de tension (LU₁, LU₂) de même polarité qui forment respectivement ledit premier lobe de tension et ledit deuxième lobe de tension.

17. Pièce d'horlogerie selon la revendication 16, **caractérisée en ce que** ledit décalage angulaire est compris entre 30° et 120° en valeur absolue.

18. Pièce d'horlogerie selon la revendication 16 ou 17, **caractérisée en ce que** le dispositif de régulation comprend un dispositif de détection (64), agencé pour pouvoir détecter alternativement l'apparition successive de premiers lobes de tension (LU₁) et de deuxièmes lobes de tension (LU₂), et un compteur temporel (CT) associé au circuit logique de commande pour permettre à ce dernier de distinguer un premier intervalle de temps, séparant un premier lobe de tension d'un deuxième lobe de tension qui suit, et un deuxième intervalle de temps séparant un deuxième lobe de tension d'un premier lobe de tension qui suit, les premier et deuxième intervalles de temps étant différents du fait de l'agencement dudit ensemble électromagnétique.

19. Pièce d'horlogerie selon la revendication 18, **caractérisée en ce que** le dispositif de régulation (52) comprend en outre un temporisateur associé au circuit logique de commande pour permettre à ce dernier d'activer, le cas échéant, la pompe de charge (60) à un premier temps donné depuis l'apparition d'un deuxième lobe de tension (LU₂), ce premier temps étant situé dans une première zone temporelle (ZT1), ou à un deuxième temps donné depuis l'apparition d'un premier lobe de tension (LU₁), ce deuxième temps étant situé dans une deuxième zone temporelle.

20. Pièce d'horlogerie selon une quelconque des revendications 1 à 15, **caractérisée en ce que** l'ensemble électromagnétique (86) comprend une paire d'aimants bipolaires (82) montés sur un balancier (18a) du résonateur mécanique (6a) et ayant deux axes d'aimantation respectifs qui sont parallèles à un plan géométrique comprenant l'axe de rotation (20) du balancier avec des polarités respectives opposées, et une bobine (28) qui est solidaire du support du résonateur mécanique, les deux aimants bipolaires de ladite paire étant agencés sur le balancier de manière que leurs flux magnétiques respectifs traversent la bobine avec un décalage temporel mais avec en partie une simultanéité du flux magnétique entrant et du flux magnétique sortant de sorte qu'une impulsion de tension induite générée entre les deux extrémités de la bobine au passage de la paire d'aimants en regard de cette bobine présente un lobe central d'amplitude maximale résultant d'un couplage simultané des deux aimants de la paire d'aimants avec la bobine ; **en ce qu'**un demi-axe médian (24a) partant de l'axe de rotation du balancier et passant par le milieu de la paire d'aimants bipolaires définit un demi-axe de référence (48a) lorsque le résonateur est au repos et ainsi dans sa position neutre, la bobine présentant en son centre un décalage angulaire (θ) relativement au demi-axe de référence de sorte à engendrer dans chaque période d'oscillation du résonateur mécanique, dans ladite plage de fonctionnement utile, deux lobes de tension centraux (LUC₁, LUC₂) ayant des polarités opposées et formant respectivement ledit premier lobe de tension et ledit deuxième lobe de tension ; et **en ce que** ledit convertisseur électrique (76) comprend un redresseur double alternance (78) agencé pour pouvoir recharger la capacité d'alimentation (C_{AL}) lors de l'apparition de premiers lobes de tension et lors de l'apparition de deuxièmes lobes de tension.

21. Pièce d'horlogerie selon la revendication 20, **caractérisée en ce que** ledit décalage angulaire est compris entre 30° et 120° en valeur absolue.

22. Pièce d'horlogerie selon la revendication 20 ou 21, **caractérisée en ce que** le dispositif de régulation (72) comprend au moins un dispositif de détection (64), agencé pour pouvoir détecter l'apparition successive de premiers lobes de tension (LUC₁) ou de deuxièmes lobes de tension (LUC₂).

23. Pièce d'horlogerie selon la revendication 22, **caractérisée en ce que** le dispositif de régulation (72) comprend en outre un temporisateur associé au circuit logique de commande pour permettre à ce dernier d'activer, le cas échéant, la pompe de charge (60a) à un premier temps donné depuis l'apparition d'un deuxième lobe de tension, ce premier temps étant situé dans une première zone temporelle, ou à un deuxième temps donné depuis l'apparition d'un premier lobe de tension, ce deuxième temps étant situé dans une deuxième zone temporelle.

24. Pièce d'horlogerie selon une quelconque des revendications 20 à 23, dans laquelle ladite paire d'aimants bipolaires est une première paire d'aimants bipolaires et ledit décalage angulaire est un premier décalage angulaire, **caractérisée en ce que** l'ensemble électromagnétique (86) comprend en outre une deuxième paire d'aimants bipolaires semblable à la première paire et également montés sur le balancier (18a) du résonateur mécanique (6a), la bobine (28) présentant en son centre un deuxième décalage angulaire (-θ), relativement à un demi-axe de référence (48b) défini par la deuxième paire d'aimants, dont la valeur est égale au premier décalage angulaire mais de sens inverse, les deux paires d'aimants étant agencées de manière que les polarités des aimants de la première paire présentent une symétrique planaire avec les polarités des aimants de la deuxième paire relativement à un plan passant par le centre de la bobine et comprenant l'axe de rotation.

25. Pièce d'horlogerie selon la revendication 24, **caractérisée en ce que** les premier et deuxième décalages angulaires ont chacun une valeur absolue égale à 90°.

26. Pièce d'horlogerie selon une quelconque des revendications précédentes, **caractérisée en ce que** le résonateur mécanique comprend un balancier-spiral ; et **en ce que** ledit dispositif d'entretien comprend un échappement (14) relié cinématiquement à un barillet (12) muni d'un ressort-moteur, l'échappement étant capable de fournir au balancier-spiral un couple mécanique d'entretien de ses oscillations.

27. Pièce d'horlogerie selon une quelconque des revendications précédentes, **caractérisée en ce que** ledit ensemble électromagnétique (27 ; 86) forme également partiellement le dispositif de mesure.

## Patentansprüche

1. Uhr (2; 70), umfassend:
- einen Mechanismus,
- einen mechanischen Resonator (6; 6a), der geeignet ist, um eine neutrale Position zu schwingen, die seinem Zustand minimaler mechanischer potentieller Energie entspricht, wobei jede Schwingung des mechanischen Resonators eine Schwingungsperiode definiert und zwei aufeinander folgende Halbschwingungen jeweils zwischen zwei Extrempositionen aufweist, die die Schwingungsamplitude des mechanischen Resonators definieren, wobei jede Halbschwingung einen Durchgang des mechanischen Resonators durch seine neutrale Position zu einem mittleren Zeitpunkt aufweist und aus einer ersten Viertelschwingung zwischen einem Anfangszeitpunkt dieser Halbschwingung und ihrem mittleren Zeitpunkt und einer zweiten Viertelschwingung zwischen diesem mittleren Zeitpunkt und einem Endzeitpunkt dieser Halbschwingung gebildet ist,
- eine Erhaltungsvorrichtung (14) des mechanischen Resonators, die mit diesem mechanischen Resonator einen mechanischen Oszillator bildet, der den Takt des Gangs des Mechanismus definiert,
- einen elektromechanischen Wandler, der dazu vorgesehen ist, mechanische Leistung des mechanischen Oszillators in elektrische Leistung umwandeln zu können, wenn der mechanische Oszillator mit einer Amplitude in einem Nutzbetriebsbereich schwingt, wobei dieser elektromagnetische Wandler gebildet ist durch eine elektromagnetische Baueinheit (27; 86) mit mindestens einer Spule (28), die an einem Element aus der mechanischen Baueinheit montiert ist, die aus dem mechanischen Resonator und seinem Träger gebildet ist, und mindestens einem Magneten (22; 90, 91, 92, 93), der am anderen Element dieser mechanischen Baueinheit montiert ist, wobei die elektromagnetische Baueinheit dazu vorgesehen ist, ein Signal einer induzierten Spannung (Ui(t)) zwischen den zwei Ausgangsklemmen (E1, E2) des elektromechanischen Wandlers zumindest dann liefern zu können, wenn der mechanische Resonator mit einer Amplitude im Nutzbetriebsbereich schwingt,
- einen elektrischen Wandler (56; 76), der mit den zwei Ausgangsklemmen des elektromechanischen Wandlers verbunden ist, um von diesem elektromechanischen Wandler einen induzierten elektrischen Strom (I_{REC}) empfangen zu können, wobei dieser elektrische Wandler eine Versorgungskapazität (C_{AL}) aufweist, die dazu vorgesehen ist, die durch den elektromechanischen Wandler gelieferte elektrische Energie zu akkumulieren, wobei dieser elektromechanische Wandler und der elektrische Wandler zusammen eine Bremsvorrichtung des mechanischen Resonators bilden, die so beschaffen ist, dass eine Menge an elektrischer Energie, die der Versorgungskapazität während des Wiederaufladens zugeführt wird, umso größer ist, je niedriger der Spannungspegel dieser Versorgungskapazität ist,
- eine Ladungseinrichtung (54; 74), die mit dem elektrischen Wandler verbunden ist oder ordnungsgemäß anschließbar ist, um durch die Versorgungskapazität versorgt zu werden,
- eine Vorrichtung (52; 72) zum Einstellen der Frequenz des mechanischen Oszillators, wobei diese Einstellvorrichtung einen Hilfsoszillator (58) und eine Messvorrichtung (64, CB) umfasst, die dazu vorgesehen ist, eine eventuelle zeitliche Abweichung des mechanischen Oszillators in Bezug auf den Hilfsoszillator detektieren zu können, wobei die Einstellvorrichtung dazu vorgesehen ist, festzustellen, ob die gemessene zeitliche Abweichung mindestens einem bestimmten Voreilen entspricht;
wobei die Uhr **dadurch gekennzeichnet ist, dass** die Bremsvorrichtung so beschaffen ist, dass in jeder Schwingungsperiode des mechanischen Resonators dann, wenn die Schwingungsamplitude dieses mechanischen Resonators im Nutzbetriebsbereich liegt, das Signal der induzierten Spannung eine erste Spannungskeule (LU₁, LUC₁), die zumindest größtenteils in einer ersten Viertelschwingung oder in jeder der zwei ersten Viertelschwingungen auftritt, und eine zweite Spannungskeule (LU₂, LUC₂), die zumindest größtenteils in einer zweiten Viertelschwingung oder in jeder der zwei zweiten Viertelschwingungen auftritt, aufweist; und dass die Bremsvorrichtung so beschaffen ist, dass zumindest dann, wenn keine zeitliche Abweichung durch die Messvorrichtung detektiert wird, und zumindest dann, wenn die Ladungseinrichtung kontinuierlich oder nahezu kontinuierlich elektrische Energie, die in der Versorgungskapazität akkumuliert ist, bei einer normalen Betriebsart der Uhr verbraucht, jede erste Spannungskeule und jede zweite Spannungskeule geeignet ist, einen induziertem Stromimpuls (P1, P2) zu erzeugen, der die Versorgungskapazität wieder auflädt; und dass jede erste Spannungskeule im absoluten Wert einen ersten maximalen Wert (UM₁) zu einem ersten Zeitpunkt (t₁) der entsprechenden ersten Viertelschwingung aufweist und jede zweite Spannungskeule im absoluten Wert einen zweiten maximalen Wert (UM₂) zu einem zweiten Zeitpunkt (t₂) der entsprechenden zweiten Viertelschwingung aufweist, wobei die erste und die zweite Spannungskeule einerseits erste Zeitzonen (ZT1), die jeweils vor dem ersten Zeitpunkt einer unterschiedlichen ersten Spannungskeule und nach dem zweiten Zeitpunkt der zweiten Spannungskeule liegen, die dieser ersten Spannungskeule vorangeht, und andererseits zweite Zeitzonen (ZT2), die jeweils vor dem zweiten Zeitpunkt einer unterschiedlichen zweiten Spannungskeule und nach dem ersten Zeitpunkt der ersten Spannungskeule liegen, die dieser zweiten Spannungskeule vorangeht, definieren; und dass die Einstellvorrichtung eine Ladungspumpenvorrichtung (60; 60a; C_{Aux}) umfasst, die dazu vorgesehen ist, auf Befehl eine elektrische Ladung von der Versorgungskapazität (C_{AL}) entnehmen zu können, um den Spannungspegel dieser Versorgungskapazität momentan zu senken; und dass die Einstellvorrichtung ferner eine Steuerlogikschaltung (62; 62a) umfasst, die am Eingang ein durch die Messvorrichtung geliefertes Messsignal empfängt, und die dazu vorgesehen ist, die Ladungspumpenvorrichtung zu aktivieren, um, wenn die gemessene zeitliche Abweichung dem mindestens einem bestimmten Voreilen entspricht, eine Entnahme einer ersten elektrischen Ladung von der Versorgungskapazität in einer ersten Zeitzone unter den ersten Zeitzonen zu bewirken, wobei die Steuerlogikschaltung ferner dazu vorgesehen ist, die Ladungspumpenvorrichtung zu aktivieren, um in einer normalen Betriebsphase der Ladungspumpenvorrichtung zumindest teilweise die erste elektrische Ladung an die Versorgungskapazität in einer zweiten Zeitzone unter den zweiten Zeitzonen zurückzugeben.

2. Uhr nach Anspruch 1, **dadurch gekennzeichnet, dass** die zweite Zeitzone (ZT2), in deren Verlauf die zumindest teilweise Rückgabe der ersten elektrischen Ladung an die Versorgungskapazität erfolgt, jene ist, die zuerst nach der ersten Zeitzone (ZT1) eintritt, in deren Verlauf die Entnahme dieser ersten elektrischen Ladung erfolgt.

3. Uhr nach Anspruch 1 oder 2, **dadurch gekennzeichnet, dass** die Einstellvorrichtung (52; 72) ferner dazu vorgesehen ist, bestimmen zu können, ob die gemessene zeitliche Abweichung mindestens einem bestimmten Nacheilen entspricht; und dass die Steuerlogikschaltung (62; 62a) dazu vorgesehen ist, die Ladungspumpenvorrichtung zu aktivieren, damit sie, wenn die gemessene zeitliche Abweichung dem mindestens einen bestimmten Nacheilen entspricht, eine Entnahme einer zweiten elektrischen Ladung von der Versorgungskapazität (C_{AL}) in einer zweiten Zeitzone unter den zweiten Zeitzonen (ZT2) bewirkt, wobei die Steuerlogikschaltung ferner dazu vorgesehen ist, die Ladungspumpenvorrichtung zu aktivieren, damit sie in einer normalen Betriebsphase der Einstellvorrichtung zumindest teilweise diese zweite elektrische Ladung an die Versorgungskapazität in einer ersten Zeitzone unter den ersten Zeitzonen (ZT1) zurückgibt.

4. Uhr nach Anspruch 3, **dadurch gekennzeichnet, dass** die erste Zeitzone (ZT1), in deren Verlauf die zumindest teilweise Rückgabe der zweiten elektrischen Ladung an die Versorgungskapazität erfolgt, jene ist, die zuerst nach der zweiten Zeitzone (ZT2) eintritt, in deren Verlauf die Entnahme dieser zweiten elektrischen Ladung erfolgt.

5. Uhr nach Anspruch 1 oder 2, **dadurch gekennzeichnet, dass** die Ladungspumpenvorrichtung aus einer Ladungspumpe (60) mit mindestens zwei Zwischenspeicherkapazitäten (C_{St}) und Schaltern und/oder Umschaltern gebildet ist, die durch die Steuerlogikschaltung (62) steuerbar sind, um entweder die mindestens zwei Zwischenspeicherkapazitäten parallel anzuordnen oder diese mindestens zwei Zwischenspeicherkapazitäten in Reihe anzuordnen; und dass die von der Versorgungskapazität entnommene erste elektrische Ladung vorübergehend in den mindestens zwei Zwischenspeicherkapazitäten bis zur zumindest teilweisen Rückgabe dieser ersten elektrischen Ladung an die Versorgungskapazität behalten wird, wobei die effektiv zurückgegebene elektrische Ladung dem Hauptteil der ersten elektrischen Ladung entspricht.

6. Uhr nach Anspruch 3 oder 4, **dadurch gekennzeichnet, dass** die Ladungspumpenvorrichtung aus einer Ladungspumpe (60) mit mindestens zwei Zwischenspeicherkapazitäten (C_{St}) und Schaltern und/oder Umschaltern gebildet ist, die durch die Steuerlogikschaltung (62) steuerbar sind, um entweder die mindestens zwei Zwischenspeicherkapazitäten parallel anzuordnen oder diese mindestens zwei Zwischenspeicherkapazitäten in Reihe anzuordnen; und dass die erste elektrische Ladung und die zweite elektrische Ladung, die von der Versorgungskapazität entnommen werden, jeweils vorübergehend in den mindestens zwei Zwischenspeicherkapazitäten bis zur zumindest teilweisen Rückgabe dieser ersten elektrischen Ladung bzw. dieser zweiten elektrischen Ladung an die Versorgungskapazität behalten werden, wobei die effektiv zurückgegebene elektrische Ladung dem Hauptteil der ersten elektrischen Ladung bzw. der zweiten elektrischen Ladung entspricht.

7. Uhr nach Anspruch 1 oder 2, **dadurch gekennzeichnet, dass** die Ladungspumpenvorrichtung aus einer Ladungspumpe (60a) und einer Hilfskapazität (C_{Aux}) zum Zwischenspeichern elektrischer Energie gebildet ist, wobei die Ladungspumpe mindestens zwei Übertragungskapazitäten (C_{Tr}) und Schalter und/oder Umschalter umfasst, die durch die Steuerlogikschaltung (62a) steuerbar sind, um entweder die mindestens zwei Übertragungskapazitäten parallel anzuordnen oder diese mindestens zwei Übertragungskapazitäten in Reihe anzuordnen; und dass die Steuerlogikschaltung und die Ladungspumpenvorrichtung dazu vorgesehen sind, mindestens den Hauptteil der von der Versorgungskapazität entnommenen ersten elektrischen Ladung über die Ladungspumpe in die Hilfskapazität zu übertragen, in der sie vorübergehend behalten wird bis zur zumindest teilweisen Rückgabe dieser ersten elektrischen Ladung an die Versorgungskapazität über die Ladungspumpe.

8. Uhr nach Anspruch 7, **dadurch gekennzeichnet, dass** die Steuerlogikschaltung (62a) und die Hilfskapazität (C_{Aux}) dazu vorgesehen sind, die Entnahme der ersten elektrischen Ladung von der Versorgungskapazität in mehreren Übertragungszyklen einer geringeren elektrischen Ladung zwischen der Versorgungskapazität und der Hilfskapazität durch die Ladungspumpe durchzuführen.

9. Uhr nach Anspruch 8, **dadurch gekennzeichnet, dass** die Steuerlogikschaltung (62a) und die Hilfskapazität (C_{Aux}) dazu vorgesehen sind, die zumindest teilweise Rückgabe der ersten elektrischen Ladung an die Versorgungskapazität in mehreren Übertragungszyklen einer geringeren elektrischen Ladung zwischen der Hilfskapazität und der Versorgungskapazität durch die Ladungspumpe durchzuführen.

10. Uhr nach Anspruch 3 oder 4, **dadurch gekennzeichnet, dass** die Ladungspumpenvorrichtung durch eine Ladungspumpe (60a) und eine Hilfskapazität (C_{Aux}) zum Zwischenspeichern elektrischer Energie gebildet ist, wobei die Ladungspumpe mindestens zwei Übertragungskapazitäten (C_{Tr}) und Schalter und/oder Umschalter umfasst, die durch die Steuerlogikschaltung (62a) steuerbar sind, um entweder die mindestens zwei Übertragungskapazitäten parallel anzuordnen oder diese mindestens zwei Übertragungskapazitäten in Reihe anzuordnen; und dass die Steuerlogikschaltung dazu vorgesehen ist, zumindest den Hauptteil der ersten elektrischen Ladung und den Hauptteil der zweiten elektrischen Ladung, die von der Versorgungskapazität entnommen werden, jeweils über die Ladungspumpe in die Hilfskapazität zu übertragen, in der sie jeweils vorübergehend bis zur zumindest teilweisen Rückgabe dieser ersten elektrischen Ladung bzw. dieser zweiten elektrischen Ladung an die Versorgungskapazität über die Ladungspumpe behalten werden.

11. Uhr nach Anspruch 10, **dadurch gekennzeichnet, dass** die Steuerlogikschaltung (62a) und die Hilfskapazität (C_{Aux}) dazu vorgesehen sind, die Entnahmen der ersten elektrischen Ladung und der zweiten elektrischen Ladung von der Versorgungskapazität jeweils in mehreren Übertragungszyklen einer geringeren elektrischen Ladung zwischen der Versorgungskapazität und der Hilfskapazität durch die Ladungspumpe durchzuführen.

12. Uhr nach Anspruch 11, **dadurch gekennzeichnet, dass** die Steuerlogikschaltung (62a) und die Hilfskapazität (C_{Aux}) dazu vorgesehen sind, die zumindest teilweisen Rückgaben der ersten elektrischen Ladung und der zweiten elektrischen Ladung an die Versorgungskapazität jeweils in mehreren Übertragungszyklen einer geringeren elektrischen Ladung zwischen der Hilfskapazität und der Versorgungskapazität durch die Ladungspumpe durchzuführen.

13. Uhr nach einem der vorangehenden Ansprüche, **dadurch gekennzeichnet, dass** die Steuerlogikschaltung (62, 62a) dazu vorgesehen ist, wenn die gemessene zeitliche Abweichung der mindestens einem bestimmten Voreilen oder mindestens einem gegebenen Voreilen, größer als dieses letztere, entspricht, mehrere Entnahmen erster elektrischer Ladungen jeweils im Verlauf mehrerer erster Zeitzonen durchzuführen.

14. Uhr nach einem der Ansprüche 3, 4, 6, 10, 11 und 12, **dadurch gekennzeichnet, dass** die Steuerlogikschaltung (62, 62a) dazu vorgesehen ist, mehrere Entnahmen zweiter elektrischer Ladungen jeweils im Verlauf mehrerer zweiter Zeitzonen durchzuführen, wenn die gemessene zeitliche Abweichung dem mindestens einen bestimmten Nacheilen oder mindestens einem Nacheilen, größer als dieses letztere, entspricht.

15. Uhr nach einem der vorangehenden Ansprüche, **dadurch gekennzeichnet, dass** die Ladungseinrichtung insbesondere durch die Einstellvorrichtung (54; 74) gebildet ist.

16. Uhr nach einem der vorangehenden Ansprüche, **dadurch gekennzeichnet, dass** die elektromagnetische Baueinheit (27) einen bipolaren Magneten (22), der an einer Unruh (18) des mechanischen Resonators (6) montiert ist und eine Magnetisierungsachse in einer geometrischen Ebene mit der Drehachse der Unruh aufweist, und eine Spule (28), die mit dem Träger des mechanischen Resonators fest verbunden ist und so angeordnet ist, dass sie durch den Magnetfluss des bipolaren Magneten durchquert wird, umfasst, wobei eine Mittelhalbachse (24), die von der Drehachse (20) der Unruh ausgeht und durch die axiale Magnetisierungsachse verläuft, eine Referenzhalbachse (48) definiert, wenn sich der Resonator in Ruhe und somit in seiner neutralen Position befindet; und dass die Spule in ihrem Zentrum einen Winkelversatz (θ) in Bezug auf die Referenzhalbachse aufweist, und der bipolare Magnet an der Unruh angeordnet ist, so dass die einzige Kopplung zwischen diesem bipolaren Magneten und der Spule in jeder Schwingungsperiode des mechanischen Resonators in dem Nutzbetriebsbereich zwei Spannungskeulen (LU₁, LU₂) mit gleicher Polarität erzeugen kann, die die erste Spannungskeule bzw. die zweite Spannungskeule bilden.

17. Uhr nach Anspruch 16, **dadurch gekennzeichnet, dass** der Winkelversatz im absoluten Wert zwischen 30° und 120° liegt.

18. Uhr nach Anspruch 16 oder 17, **dadurch gekennzeichnet, dass** die Einstellvorrichtung eine Detektionsvorrichtung (64), die dazu vorgesehen ist, abwechselnd das aufeinanderfolgende Auftreten von ersten Spannungskeulen (LU₁) und von zweiten Spannungskeulen (LU₂) detektieren zu können, und einen Zeitzähler (CT) umfasst, der der Steuerlogikschaltung zugeordnet ist, um letzterer zu ermöglichen, ein erstes Zeitintervall, das eine erste Spannungskeule von einer folgenden zweiten Spannungskeule trennt, und ein zweites Zeitintervall, das eine zweite Spannungskeule von einer folgenden ersten Spannungskeule trennt, zu unterscheiden, wobei das erste und das zweite Zeitintervall aufgrund der Anordnung der elektromagnetischen Baueinheit unterschiedlich sind.

19. Uhr nach Anspruch 18, **dadurch gekennzeichnet, dass** die Einstellvorrichtung (52) ferner einen Zeitgeber umfasst, der der Steuerlogikschaltung zugeordnet ist, um letzterer zu ermöglichen, gegebenenfalls die Ladungspumpe (60) zu einer ersten bestimmten Zeit nach Auftreten einer zweiten Spannungskeule (LU₂) zu aktivieren, wobei diese erste Zeit in einer ersten Zeitzone (ZT1) liegt, oder zu einer zweiten bestimmten Zeit nach Auftreten einer ersten Spannungskeule (LU₁) zu aktivieren, wobei diese zweite Zeit in einer zweiten Zeitzone liegt.

20. Uhr nach einem der Ansprüche 1 bis 15, **dadurch gekennzeichnet, dass** die elektromagnetische Baueinheit (86) ein Paar bipolarer Magneten (82), die an einer Unruh (18a) des mechanischen Resonators (6a) montiert sind und zwei jeweilige Magnetisierungsachsen aufweisen, die zu einer die Drehachse (20) der Unruh umfassenden geometrischen Ebene parallel sind, mit jeweils entgegengesetzten Polaritäten, und eine mit dem Träger des mechanischen Resonators fest verbundene Spule (28) umfasst, wobei die zwei bipolaren Magnete des Paars an der Unruh angeordnet sind, so dass ihre jeweiligen Magnetflüsse die Spule mit einem Zeitversatz, aber mit teilweise gleichzeitigem eintretenden Magnetfluss und austretenden Magnetfluss durchqueren, so dass ein Impuls einer induzierten Spannung, der zwischen den zwei Enden der Spule beim Durchgang des Paars von Magneten gegenüber dieser Spule erzeugt wird, eine zentrale Keule maximaler Amplitude aufweist, die aus einer gleichzeitigen Kopplung der zwei Magnete des Paars von Magneten mit der Spule resultiert; und dass eine Mittelhalbachse (24a), die von der Drehachse der Unruh ausgeht und durch die Mitte des Paars bipolarer Magnete verläuft, eine Referenzhalbachse (48a) definiert, wenn der Resonator sich in Ruhe und somit in seiner neutralen Position befindet, wobei die Spule in ihrem Zentrum einen Winkelversatz (θ) in Bezug auf die Referenzhalbachse aufweist, um in jeder Schwingungsperiode des mechanischen Resonators in dem Nutzbetriebsbereich zwei zentrale Spannungskeulen (LUC₁, LUC₂) mit entgegengesetzten Polaritäten zu erzeugen, die die erste Spannungskeule bzw. die zweite Spannungskeule bilden; und dass der elektrische Wandler (76) einen Vollweggleichrichter (78) umfasst, der dazu vorgesehen ist, die Versorgungskapazität (C_{AL}) beim Auftreten erster Spannungskeulen und beim Auftreten zweiter Spannungskeulen wiederaufladen zu können.

21. Uhr nach Anspruch 20, **dadurch gekennzeichnet, dass** der Winkelversatz im absoluten Wert zwischen 30° und 120° liegt.

22. Uhr nach Anspruch 20 oder 21, **dadurch gekennzeichnet, dass** die Einstellvorrichtung (72) mindestens eine Detektionsvorrichtung (64) umfasst, die dazu vorgesehen ist, das aufeinander folgende Auftreten erster Spannungskeulen (LUC₁) oder zweiter Spannungskeulen (LUC₂) detektieren zu können.

23. Uhr nach Anspruch 22, **dadurch gekennzeichnet, dass** die Einstellvorrichtung (72) ferner einen Zeitgeber umfasst, der der Steuerlogikschaltung zugeordnet ist, um letzterer zu ermöglichen, gegebenenfalls die Ladungspumpe (60a) zu einer ersten bestimmten Zeit nach Auftreten einer zweiten Spannungskeule zu aktivieren, wobei diese erste Zeit in einer ersten Zeitzone liegt, oder zu einer zweiten bestimmten Zeit nach Auftreten einer ersten Spannungskeule zu aktivieren, wobei diese zweite Zeit in einer zweiten Zeitzone liegt.

24. Uhr nach einem der vorangehenden Ansprüche 20 bis 23, wobei das Paar bipolarer Magnete ein erstes Paar bipolarer Magnete ist und der Winkelversatz ein erster Winkelversatz ist, **dadurch gekennzeichnet, dass** die elektromagnetische Baueinheit (86) ferner ein zweites Paar bipolarer Magneten umfasst, das dem ersten Paar ähnlich ist und ebenfalls an der Unruh (18a) des mechanischen Resonators (6a) montiert ist, wobei die Spule (28) in ihrem Zentrum einen zweiten Winkelversatz (-θ) in Bezug auf eine Referenzhalbachse (48b) aufweist, die durch das zweite Paar von Magneten definiert ist, dessen Wert gleich dem ersten Winkelversatz, aber in umgekehrter Richtung, ist, wobei die zwei Paare von Magneten so angeordnet sind, dass die Polaritäten der Magnete des ersten Paars eine Ebenensymmetrie mit den Polaritäten der Magneten des zweiten Paars in Bezug auf eine Ebene aufweisen, die durch das Zentrum der Spule verläuft und die Drehachse umfasst.

25. Uhr nach Anspruch 24, **dadurch gekennzeichnet, dass** der erste und der zweite Winkelversatz jeweils einen absoluten Wert gleich 90° aufweisen.

26. Uhr nach einem der vorangehenden Ansprüche, **dadurch gekennzeichnet, dass** der mechanische Resonator eine Unruh-Spiralfeder umfasst; und dass die Erhaltungsvorrichtung eine Hemmung (14) umfasst, die kinematisch mit einem Federhaus (12) verbunden ist, das mit einer Zugfeder ausgestattet ist, wobei die Hemmung geeignet ist, der Unruh-Spiralfeder ein mechanisches Moment zum Erhalten ihrer Schwingungen zuzuführen.

27. Uhr nach einem der vorangehenden Ansprüche, **dadurch gekennzeichnet, dass** die elektromagnetische Baueinheit (27; 86) auch teilweise die Messvorrichtung bildet.

## Claims

1. Timepiece (2; 70), comprising:
- a mechanism,
- a mechanical resonator (6; 6a) suitable for oscillating about a neutral position corresponding to the minimal mechanical potential energy state thereof, each oscillation of the mechanical resonator defining an oscillation period and having two successive alternations each between two extreme positions which define the oscillation amplitude of the mechanical resonator, each alternation having a passage of the mechanical resonator via the neutral position thereof at a median time and consisting of a first half-alternation between an initial time of this alternation and the median time thereof and a second half-alternation between this median time and an end time of this alternation,
- a maintenance device (14) of the mechanical resonator forming with this mechanical resonator a mechanical oscillator which defines the running speed of said mechanism,
- an electromechanical transducer arranged to be able to convert mechanical power from the mechanical oscillator into electrical power when the mechanical resonator oscillates with an amplitude included in an effective functioning range, this electromagnetic transducer being formed by an electromagnetic assembly (27; 86) comprising at least one coil (28), mounted on an element from the mechanical assembly consisting of the mechanical resonator and the support thereof, and at least one magnet (22; 90,91,92,93) mounted on the other element of this mechanical assembly, the electromagnetic assembly being arranged so as to be able to supply an induced voltage signal (Ui(t)) between the two output terminals (E1, E2) of the electromechanical transducer at least when the mechanical resonator oscillates with an amplitude included in the effective functioning range,
- an electric converter (56; 76) connected to the two output terminals of the electromechanical transducer so as to be able to receive an induced electric current (I_{REC}) from this electromechanical transducer, this electric converter comprising a power supply capacitor (C_{AL}) arranged to store the electrical energy supplied by the electromechanical transducer, this electromechanical transducer and the electric converter forming a braking device of the mechanical resonator together which is arranged such that a quantity of electrical energy supplied to the power supply capacitor during recharging increases as the voltage level of this power supply capacitor lowers,
- a load (54; 74) connected or suitable for being regularly connected to the electric converter and powered by the power supply capacitor,
- a device (52; 72) for regulating the frequency of the mechanical oscillator, this regulating device comprising an auxiliary oscillator (58) and a measuring device (64, CB) arranged to be able to detect a potential time drift of the mechanical oscillator relative to the auxiliary oscillator, the regulating device being arranged to be able to determine whether the time drift measured corresponds to at least one certain gain;
the timepiece being **characterized in that** the braking device is arranged such that, in each oscillation period of the mechanical resonator when the oscillation amplitude of this mechanical resonator is in the effective functioning range, the induced voltage signal exhibits a first voltage lobe (LU₁, LUC₁) occurring at least mostly in a first half-alternation or in each of the two first half-alternations and a second voltage lobe (LU₂, LUC₂) occurring at least mostly in a second half-alternation or in each of the two second half-alternations; **in that** the braking device is arranged such that, at least when no time drift is detected by the measuring device and at least when said load consumes continuously or quasi-continuously electrical energy stored in the power supply capacitor during a normal functioning mode of the timepiece, each first voltage lobe and each second voltage lobe is suitable for generating an induced current pulse (P1, P2) which recharges the power supply capacitor; **in that** each first voltage lobe exhibits, in absolute values, a first maximum value (UM₁) at a first time (t₁) of the corresponding first half-alternation and each second voltage lobe exhibits, in absolute values, a second maximum value (UM₂) at a second time (t₂) of the corresponding second half-alternation, the first and second voltage lobes defining, on one hand, first time zones (ZT1) each situated before said first time of a different first voltage lobe and after the second time of the second voltage lobe preceding this first voltage lobe and, on the other, second time zones (ZT2) each situated before said second time of different second voltage lobe and after the first time of the first voltage lobe preceding this second voltage lobe; **in that** the regulating device comprises a load pump device (60; 60a, C_{Aux}) arranged to be able to extract on request an electric load from the power supply capacitor (C_{AL}), so as to momentarily reduce the voltage level of this power supply capacitor; and **in that** the regulating device further comprises a logic control circuit (62; 62a) which receives as an input a measurement signal supplied by the measuring device and which is arranged to activate the load pump device so that, when the time drift measured corresponds to said at least one certain gain, it extracts a first electric load from the power supply capacitor in a first time zone among said first time zones, the logic control circuit being further arranged to activate the load pump device so that it renders, in a normal functioning phase of the load pump device, at least partially the first electric load to the power supply capacitor in a second time zone among said second time zones.

2. Timepiece according to claim 1, **characterized in that** said second time zone (ZT2), during which the at least partial rendering of said first electric load to the power supply capacitor occurs, is that which occurs first after the first time zone (ZT1) during which the extraction of this first electric load occurs.

3. Timepiece according to claim 1 or 2, **characterized in that** the regulating device (52; 72) is also arranged to be able to determine whether the time drift measured corresponds to at least one certain loss; and **in that** said logic control circuit (62; 62a) is arranged to activate the load pump device so that, when the time drift measured corresponds to said at least one certain loss, it extracts a second electric load from the power supply capacitor (C_{AL}) in a second time zone among said second time zones (ZT2), the logic control circuit being further arranged to activate the load pump device so that it renders, in a normal functioning phase of the regulating device, at least partially this second electric load to the power supply capacitor in a first time zone among said first time zones (ZT1).

4. Timepiece according to claim 3, **characterized in that** said first time zone (ZT1), during which the at least partial rendering of said second electric load to the power supply capacitor occurs, is that which occurs first after the second time zone (ZT2) during which the extraction of this second electric load occurs.

5. Timepiece according to claim 1 or 2, **characterized in that** the load pump device consists of a load pump (60) comprising at least two temporary storage capacitors (C_{St}) and switches and/or switches suitable for being controlled by the logic control circuit (62) so as to either arrange the at least two temporary storage capacitors in parallel, or arrange these at least two temporary storage capacitors in series; and **in that** said first electric load extracted from the power supply capacitor is stored temporarily in the at least two temporary storage capacitors until said at least partial rendering of this first electric load to the power supply capacitor, the electric load actually rendered corresponding to most of said first electric load.

6. Timepiece according to claim 3 or 4, **characterized in that** the load pump device is formed of a load pump (60) comprising at least two temporary storage capacitors (C_{St}) and switches and/or switches suitable for being controlled by the logic control circuit (62) so as to either arrange the at least two temporary storage capacitors in parallel, or arrange these at least two temporary storage capacitors in series; and **in that** said first electric load and said second load extracted from the power supply capacitor are each stored temporarily in the at least two temporary storage capacitors until said at least partial rendering of this first electric load, respectively this second electric load to the power supply capacitor, the electric load actually rendered corresponding to most of said first electric load, respectively said second electric load.

7. Timepiece according to claim 1 or 2, **characterized in that** the load pump device is formed of a load pump (60a) and an auxiliary temporary electrical energy storage capacitor (C_{Aux}), the load pump comprising at least two transfer capacitors (C_{Tr}) and switches and/or switches suitable for being controlled by the logic control circuit (62a) so as to either arrange the at least two transfer capacitors in parallel, or arrange these at least two transfer capacitors in series; and **in that** the logic control circuit and the load pump device are arranged so that at least most of said first electric load extracted from the power supply capacitor is transferred via the load pump in the auxiliary capacitor wherein it is stored temporarily until said at least partial rendering of this first electric load to the power supply capacitor via the load pump.

8. Timepiece according to claim 7, **characterized in that** the logic control circuit (62a) and the auxiliary capacitor (C_{Aux}) are arranged such that said extraction of said first electric load from the power supply capacitor is performed in a plurality of transfer cycles of a lesser electric load between the power supply capacitor and the auxiliary capacitor via the load pump.

9. Timepiece according to claim 8, **characterized in that** the logic control circuit (62a) and the auxiliary capacitor (C_{Aux}) are arranged such that said at least partial rendering of said first electric load to the power supply capacitor is performed in a plurality of transfer cycles of a lesser electric load between the auxiliary capacitor and the power supply capacitor via the load pump.

10. Timepiece according to claim 3 or 4, **characterized in that** the load pump device is formed of a load pump (60a) and an auxiliary temporary electrical energy storage capacitor (C_{Aux}), the load pump comprising at least two transfer capacitors (C_{Tr}) and switches and/or switches suitable for being controlled by the logic control circuit (62a) so as to either arrange the at least two transfer capacitors in parallel, or arrange these at least two transfer capacitors in series; and **in that** the logic control circuit and the load pump device are arranged so that at least most of said first electric load and most of said second electric load extracted from the power supply capacitor can each be transferred via the load pump in the auxiliary capacitor wherein they are stored temporarily until said at least partial rendering of this first electric load, respectively this second electric load to the power supply capacitor via the load pump.

11. Timepiece according to claim 10, **characterized in that** the logic control circuit (62a) and the auxiliary capacitor (C_{Aux}) are arranged such that the extractions of said first electric load and said second electric load from the power supply capacitor are each performed in a plurality of transfer cycles of a lesser electric load between the power supply capacitor and the auxiliary capacitor via the load pump.

12. Timepiece according to claim 11, **characterized in that** the logic control circuit (62a) and the auxiliary capacitor (C_{Aux}) are arranged such that said at least partial renderings of said first electric load and said second electric load to the power supply capacitor are each performed in a plurality of transfer cycles of a lesser electric load between the auxiliary capacitor and the power supply capacitor via the load pump.

13. Timepiece according to any one of the preceding claims, **characterized in that** the logic control circuit (62, 62a) is arranged so as to be able to perform, when the time drift measured corresponds to said at least one certain gain or to at least one given gain greater than the latter, a plurality of extractions of first electric loads respectively during a plurality of first time zones.

14. Timepiece according to any one of claims 3, 4, 6, 10, 11 and 12, **characterized in that** the logic control circuit (62, 62a) is arranged so as to be able to perform, when the time drift measured corresponds to said at least one certain loss or to at least one loss greater than the latter, a plurality of extractions of second electric loads respectively during a plurality of second time zones.

15. Timepiece according to any one of the preceding claims, **characterized in that** said load is formed particularly by the regulating device (54; 74).

16. Timepiece according to any one of the preceding claims, **characterized in that** the electromagnetic assembly (27) comprises a bipolar magnet (22), mounted on a balance (18) of the mechanical resonator (6) and having a magnetization axis in a geometric plane comprising the axis of rotation of the balance, and a coil (28) which is rigidly connected to the support of the mechanical resonator and arranged so as to be traversed by the magnetic flux of the bipolar magnet, a median half-axis (24) starting from the axis of rotation (20) of the balance and passing via said axial magnetization axis defining a reference half-axis (48) when the resonator is at rest and thus in the neutral position thereof; and **in that** said coil exhibits at the center thereof an angular lag (θ) relative to the reference half-axis and said bipolar magnet is arranged on the balance such that mere coupling between this bipolar magnet and the coil can induce in each oscillation period of the mechanical resonator, in said effective functioning range, two voltage lobes (LU₁, LU₂) of the same polarity which form respectively said first voltage lobe and said second voltage lobe.

17. Timepiece according to claim 16, **characterized in that** said angular lag is between 30° and 120° in absolute values.

18. Timepiece according to claim 16 or 17, **characterized in that** the regulating device comprises a detection device (64), arranged to be able to detect alternately the successive appearance of first voltage lobes (LU₁) and second voltage lobes (LU₂), and a time counter (CT) associated with the logic control circuit to enable the latter to distinguish a first time interval, separating a first voltage lobe from a subsequent second voltage lobe, and a second time interval separating a second voltage lobe from a subsequent first voltage lobe, the first and second time intervals being different due to the arrangement of said electromagnetic assembly.

19. Timepiece according to claim 18, **characterized in that** the regulating device (52) further comprises a timer associated with the logic control circuit to enable the latter to activate, if required, the load pump (60) at a first given time since the appearance of a second voltage lobe (LU₂), this first time being situated in a first time zone (ZT1), or at a second given time since the appearance of a first voltage lobe (LU₁), this second time being situated in a second time zone.

20. Timepiece according to any one of claims 1 to 15, **characterized in that** the electromagnetic assembly (86) comprises a pair of bipolar magnets (82) mounted on a balance (18a) of the mechanical resonator (6a) and having two respective magnetization axes which are parallel with a geometric plane comprising the axis of rotation (20) of the balance with opposite respective polarities, and a coil (28) which is rigidly connected to the support of the mechanical resonator, the two bipolar magnets of said pair being arranged on the balance such that the respective magnetic fluxes thereof pass through the coil with a time-lag but with in part a simultaneity of the incoming magnetic flux and the outgoing magnetic flux such that an induced voltage pulse generated between the two ends of the coil upon the passage of the pair of magnets facing this coil exhibits a central lobe of maximum amplitude resulting from simultaneous coupling of the pair of magnets with the coil; **in that** a median half-axis (24a) starting from the axis of rotation of the balance and passing via the midpoint of the pair of bipolar magnets defines a reference half-axis (48a) when the resonator is at rest and thus in the neutral position thereof, the coil exhibiting at the center thereof an angular lag (θ) relative to the reference half-axis so as to generate in each oscillation period of the mechanical resonator, in each effective functioning range, two central voltage lobes (LUC₁, LUC₂) having opposite polarities and forming respectively said first voltage lobe and said second voltage lobe; and **in that** said electric converter (76) comprises a double-alternation rectifier (78) arranged to be able to recharge the power supply capacitor (C_{AL}) upon the appearance of first voltage lobes and upon the appearance of second voltage lobes.

21. Timepiece according to claim 20, **characterized in that** said angular lag is between 30° and 120° in absolute values.

22. Timepiece according to claim 20 or 21, **characterized in that** the regulating device (72) comprises at least one detection device (64), arranged to be able to detect the successive appearance of first voltage lobes (LUC₁) or second voltage lobes (LUC₂).

23. Timepiece according to claim 22, **characterized in that** the regulating device (72) further comprises a timer associated with the logic control circuit to enable the latter to activate, if required, the load pump (60a) at a first given time since the appearance of a second voltage lobe, this first time being situated in a first time zone, or at a second given time since the appearance of a first voltage lobe, this second time being situated in a second time zone.

24. Timepiece according to any one of claims 20 to 23, wherein said pair of bipolar magnets is a first pair of bipolar magnets and said angular lag is a first angular lag, **characterized in that** the electromagnetic assembly (86) further comprises a second pair of bipolar magnets similar to the first pair and also mounted on the balance (18a) of the mechanical resonator (6a), the coil (28) exhibiting at the center thereof a second angular lag (-θ), relative to a reference half-axis (48b) defined by the second pair of magnets, the value whereof is equal to the first angular lag but of opposite direction, the two pairs of magnets being arranged such that the polarities of the magnets of the first pair exhibit a planar symmetry with the polarities of the magnets of the second pair relative to a plane passing via the center of the coil and comprising the axis of rotation.

25. Timepiece according to claim 24, **characterized in that** the first and second angular lags each have an absolute value equal to 90°.

26. Timepiece according to any one of the preceding claims, **characterized in that** the mechanical resonator comprises a balance-spring; and **in that** said maintenance device comprises an escapement (14) kinematically linked to a barrel (12) equipped with a driving spring, the escapement being capable of supplying the balance-spring with a mechanical maintenance torque of the oscillations thereof.

27. Timepiece according to any one of the preceding claims, **characterized in that** said electromagnetic assembly (27; 86) also partially forms the measuring device.
